# EUROPEAN PATENT APPLICATION

(11) **EP 3 040 922 A1**
(43) Date of publication of application: **06.07.2016**
(21) Application number: 14382580.0
(22) Date of filing: 30.12.2014
(51) Int. Cl.: G06Q 20/32, H04L 29/06, H04W 12/06

(54) **Method and system for providing authentication, integrity and confidentiality for transactions performed by mobile device users**

(71) Applicant: Telefonica Digital España, S.L.U., 28013 Madrid (ES)
(72) Inventor: Chana, Sukjinder Singh, 28013 Madrid (ES)
(74) Representative: Carpintero Lopez, Francisco

(57) **Abstract**

Present invention refers to a SIM based method, system and application for providing authentication, integrity and confidentially for transactions performed by an user of a mobile device, authenticating mobile device user and guaranteeing both the integrity and confidentiality of information or instructions provided by said user and ensuring the integrity of transactions. This technical solution seeks to leverage existing payment standards practices to enable Authenticity, Integrity and Confidentiality to be managed effectively from within the secure confines of the SIM (the most secure operating environment on a mobile device).

## Description

### TECHNICAL FIELD OF THE INVENTION

Present invention generally relates to security in transactions performed by a user in a communications network. More specifically, it relates to a SIM based method and system for authenticating mobile device users, guaranteeing both the integrity and confidentiality of information or instructions provided by said user and ensuring the integrity of transactions.

### BACKGROUND OF THE INVENTION

Different payment architectures are used every day by millions of people worldwide to facilitate various types of commercial transactions. EMV ("Europay, MasterCard and Visa") is a global standard for inter-operation of integrated circuit cards (IC cards or "chip cards") and IC card capable point of sale (POS) terminals and automated teller machines (ATMs) for authenticating credit and debit cards. Amongst its achievements, most notably, EMV has managed to create a truly global payment infrastructure which is fully interoperable. Beyond global interoperability, EMV creates an acceptable balance between Risk and Liability. Adherence to EMV standards ensures that risk to the consumer, retailer and issuing bank is minimized whilst those, i.e. the schemes, providing the technology to mitigate risk, feel comfortable in sharing the liability with their members in exchange for a revenue share. The key point is that EMV based schemes like Visa and MasterCard, merchants such as Amazon or Ebay and alternate payment solution providers such as PayPal, have developed proprietary technologies that have been applied in scale and allow them to minimize their risk in order to indemnify consumers against loss. This allows them to build viable revenue streams based on small percentages of the transaction value.

EMV manages risk in a number of ways. The operational basis of EMV risk management are technical standards governing the equipment and infrastructure over which transactions are conducted, rules and operating regulations that clearly identify roles and responsibilities and Certification and regulation of all those organizations and entities participating in the value chain. Whilst the rules and regulations are important they are deemed out of scope for this document, this document will focus on some of the technical aspects that EMV specifies in order to mitigate risk, since the present invention concept seeks to leverage these to develop MNO specific solutions.

EMV based schemes define common standards against which they or other application providers can implement. The standards cover every aspect of the payment environment including:
1. How applications that manage transactions will be hosted
2. The message and command that these applications will support
3. The data sets and security attributes that will be used to ensure transactional integrity and authenticity
4. The algorithms or processes that will be used to ensure transactional integrity and authenticity.

As such banks or service provider's utilizing applications certified to scheme standards can be sure that, when they receive a request to authorize the transaction, that request has been made by a genuine card issued by the bank, by the person to whom they issued the card and it has not been tampered with on route to the bank. These three pieces of information when combined with information on the status of the account from which funds are being requested allow the bank to make a risk based decision relating to the approval of the transaction. They also make the decision safe in the knowledge that if they have obeyed all the rules and the transaction turns out to be fraudulent they will not carry the liability.

VSDC, MChip and other such standards achieve this degree of certainty through the use of cryptography. The bases of these techniques are secret keys that are known only to the bank and card. They are stored securely in the payment card and are used to encrypt and/or sign sensitive data being exchanged between card and bank. The data being signed includes the transactional value and the result of the PIN verification. The secret nature of the keys and the algorithms used ensure that the data received by the bank is tamperproof, confidential and reliable.

The creation of PayPal™, though originally intended to fulfill the needs of a specific market, has created a credible challenge to the schemes built on EMV. Most importantly these alternatives are poised to challenge EMV in its traditional role as the technology of choice during the conduct of face to face transactions. Amongst all this turmoil Mobile Network operators (MNO) have also emerged as potential players in the world of payments.

To date, mobile operators have relied on the reuse of technologies provided by others to build their financial services propositions in the belief that the position of the SIM was unassailable and that the payments industry were their friends. However, the role of the mobile operator in the world of mobile EMV payments is therefore now threatened due to technical advances that are moving away from the SIM (subscriber identity module) and heading to solutions that don't have a role for the operator to fulfill beyond that of connectivity provider. The mobile operators need something to get them back to a revenue earning position. In order to do that, mobile operators can participate on their own terms through innovation and the development of their own technologies, as they are still in a position to leverage the acknowledged security of their SIM and at liberty to build rival or complimentary propositions that can help secure commercial environments and transactions. The present invention discloses a low cost low risk solution that can help the mobile operator provide security to the world of commerce using their most valuable asset the SIM. Most importantly if the mobile operators can work through their industry bodies, such as the GSMA, to standardize this technology into every SIM across all operators, global scale could potentially be reached with ease.

Near Field Technology (NFC) was heralded as the technology that would allow the mobile operator to participate in the world of EMV payments, however possible intransigence on the part of the operators and a desire on the part of the schemes not to share transactional interchange fees has resulted in an inability to create a viable business case for NFC card issuance. In addition to this some of the technical challenges of SIM centric NFC issuance have led to the creation of components in the NFC ecosystem that have added cost to the business case for NFC compounding the issue. Besides the previously mentioned technologies, other existing payment solutions commonly used are:
SWP_NFC: Single wire Protocol (SWP) NFC technologies aim to place a payment issuer owned application onto the mobile operators SIM and then connect that application to the NFC controller on the mobile device. These solutions require the use of:
   1. Specific mobile handsets that support NFC technology
   2. Expensive SIM hardware that supports SWP
   3. Relationships between mobile operators and issuing banks
   4. Complex issuance and application lifecycle management processes
   5. Trusted service managers.
HCE: Host Card Emulation (HCE) introduced the possibility of a client application running under the general application space of a mobile device being able to access the NFC controller on that device and as such communicating directly with a contactless reader. HCE based solutions suffer from:
   1. Usage problems when the mobile device is not connected to the network
   2. Reduced security in the absence of a hardware based secure element on the device
   3. Portability issues when used in conjunction with a device based secure element

Hence, there is a need of a technical solution in the area of mobile payments which solves the following problems:
1. It allows the SIM to play a part in the delivery of mobile NFC payments
2. It is not encumbered with expensive or difficult application deployment processes
3. It includes application components who's lifecycle can be simply managed
4. It enhances the security of new and emerging technologies such as HCE
5. It is not tied to a single device, or device capability
6. It complements emerging payment solutions such as tokenization and cloud payments
7. It offers the MNO options to develop services independently
8. It is reusable in other services provided by the mobile operator
9. It reuses EMV principles and offers EMV level capability
10. It allows the mobile operator to assess risk and manage liability during the delivery of any service and trade of liability for revenue share.

### SUMMARY OF THE INVENTION

Present invention solves the aforementioned problems by providing a SIM based method and system for Authenticity and Integrity Management in user transactions performed via an user equipment (a mobile device, a mobile telephone, an smart phone, a laptop, a PC or any other type of electronic user equipment). The technical solution proposed is called AIM (Authenticity and Integrity Management).

This technical solution seeks to leverage existing payment standards (as EMV) practices to enable ***Authenticity*** and ***Integrity*** to be managed effectively from within the secure confines of the SIM (the most secure operating environment on a mobile device) using a generic application whilst not being encumbered with the need to employ complex Over-the-Air (OTA) process or expensive partners such as the Trusted Service Manager (TSM).

The technical solution for the management of authenticity and integrity consists of several components; central to the proposal is the deployment of an Authentication and Integrity Management (AIM) application onto the SIM. The SIM based application manages user authentication, transactional integrity and data confidentiality for any client application that delegates these tasks to it. These functions are managed through data attributes in the form of security secrets, cryptographic keys to drive generic and/or specific functional algorithms that are executed within the secure environment of the host SIM. In addition to this there are two API libraries that make up the AIM software development kit (SDK). The function of the AIM is to authenticate a user and guarantee the integrity of information provided or instructions issued by that user.

The task assigned to AIM is to authenticate users, guarantee both the integrity and confidentiality of information or instructions provided by that user and ensure the integrity of transactions sent to AIM for processing. AIM achieves this by using the data attributes set by the relevant parties processing the input data using functional algorithms. The functions fall into two broad categories: Generic cryptographic capabilities based on symmetric keys (as Encrypt, Decrypt, Sign or Hash) and Application specific algorithms (as Payment Token Management or Payment Cryptogram Generation).

The AIM, in conjunction with API's available through the SDK, could be used by application developers to build service clients that delegate security management to the AIM. These applications protect the service being provided by a service provider such as a bank and the service providers hosts systems can authenticate a user and obtain digitally signed instructions from that user or exchange information securely. Use of AIM in these applications ensure that anyone relying of information from a remote service protected by AIM can be sure that the information they receive is genuine and originating from the person they have business relationship with.

Service providers (known as AIM consumers) deliver services and client applications that delegate security and user authentication to AIM. They must bind their service to AIM through a onetime process that allows them to establish the trusted link between themselves and the AIM user. The consumer may validate/supplement the information they hold on their subscriber with details held by the mobile operator in the role of the issuer.

AIM allows the mobile network operator, MNO, (the AIM Issuer) to offer levels of assurance and security equal to those currently being achieved by EMV payment applications. The applications that rely AIM are not tied to specific device based security mechanism or solution, are portable and available even when the device is not connected to the mobile network or other cloud networks.

In a first aspect, it is provided a method for providing an authentication, integrity and confidentially service for transactions performed between an user of a first mobile device and a provider of user services through a mobile communications network, the method comprising the following steps:
a) Receiving from the user by the first mobile device, at least a transaction request for a provider of user services;
b) For each transaction request received:
   b1) A first application of the first mobile device, verifying user identity for the authentication, integrity and confidentially service, where the first application has been previously loaded in a Subscriber Identity Module of the first mobile device;
   b2) If the user identity verification is successful, the first application preparing, at least one message to be sent to the provider of user services including transaction information and for each message prepared related to each transaction, the first application calculating a signature for each message using an unique asymmetric key and including said signature in the message;
   b3) the first mobile device, sending the at least one prepared message to a server of the provider of user services through the mobile communications network.

The step of verifying user identity may comprise the following steps:
- Prompting the user to enter an user personal identification number, PIN, for the authentication, integrity and confidentially service, associated to the user of the first mobile device;
- Receiving the user personal identification number;
- The first application validating the user personal identification number.

The verification of user identity may be as well performed using biometric identification of the user.

The user personal identification number for example may be generated by a mobile operator of the mobile communications network and provided to the user and to the first mobile device during the user registration in the authentication, integrity and confidentiality service. Another possibility is that the user personal identification number is set by the user during the user registration in the authentication, integrity and confidentiality service, by changing an initial personal identification number generated by a mobile operator of the mobile communications network.

According to an embodiment the method further includes:
- for each message related to the transaction received from the first mobile device by the server of the provider of user services, checking (e.g. by the server) the integrity of the message by validating the signature using the public part of the unique asymmetric key and, if the validation is not successful, sending an error message to the first mobile device and stopping the transaction. The public part of the asymmetric key may be included in the message received.

The unique asymmetric key may be univocally associated to the first application, being different to other asymmetric key assigned to other first application of other users.

The transaction performed by the user may be for example a payment transaction, to request a card token form a tokenization service provider, a user credit/debit card transaction, a card no present transaction... or any other type of transaction.

The interaction between the first application and the user of the mobile device (for example, to send/receive the transaction request, to enter the PIN...) may be done using a second application installed in the first mobile device and the user access to the provider of user services may be done by the second application

The at least one message may be sent to the service provider via a Point of Sale Terminal which may use NFC technology.

The first application may have an unique identification associated to the Subscriber Identity Module (for example, to the SIM ICCID) of the first mobile device, which uniquely identifies said first application from other first applications loaded in other Subscriber Identity Module and he first application may be loaded in the SIM during SIM manufacture.

In a second aspect, it is provided a system for providing an authentication, integrity and confidentially service for transactions performed between an user of a first mobile device and a provider of user services through a mobile communications network, the system comprising the first mobile device comprising:
- Means for receiving from the user, at least a transaction request for the provider of user services;
- A subscriber identity module where a first application has been previously loaded, where the first application is configured to, for each transaction request received by the mobile device:
   - Verifying user identity for the authentication, integrity and confidentially service;
   - If the user identity verification is successful, preparing at least one message to be sent to the provider of user services including transaction information and for each message prepared related to each transaction, calculating a signature for each message using an unique asymmetric key and including said signature in the message;
- Means for sending the at least one prepared message related to each transaction, to a server of the provider of user services through the mobile communications network.

In a third aspect, it is provided an application for providing an authentication, integrity and confidentially service for transactions performed between an user of a first mobile device and a provider of user services through a mobile communications network, the application comprising:
- Means for, for each transaction request received in the first mobile device:
   - Verifying user identity for the authentication, integrity and confidentially service;
   - If the user identity verification is successful, preparing at least one message to be sent to the provider of user services including transaction information and for each message prepared related to each transaction, calculating a signature for each message using an unique asymmetric key and including said signature in the message;

A last aspect of the invention refers to a computer program product comprising computer program code adapted to perform the method of the invention, when said program code is executed on a computer, a digital signal processor, a field-programmable gate array, an application-specific integrated circuit, a microprocessor, a micro-controller, or any other form of programmable hardware. A digital data storage medium is also provided for storing a computer program which comprises instructions causing a computer executing the program to perform the above-described method

The proposed invention implies many advantages, as for example:
- AIM can be deployed on a standard SIMs; for example, a SIM that does not support SWP (Single Wire Protocol). Whilst the application could be used in the execution of HCE based NFC transactions this function can be supported through a cheaper SIM. Conventional GlobalPlatform SIMs could be used to host AIM, as long as they were able to support cryptography (as RSA). Alternatively native SIMs could be used and the AIM could be used through the SIM Toolkit (STK) framework.
- With the ability to support existing SIM architectures comes the advantage of deploying AIM into the existing SIM estate. AIM can be deployed to any existing SIM that is on the GlobalPlatform, supporting RSA and which has sufficient space for the application to be loaded, has Issuer Security Domain (ISD) keys held by the MNO or a body representing the MNO and, optionally, can be supported by an over-the-air (OTA) process.
- Global Strategy and Standardization: AIM is capable of reaching mass scale with little effort. Coupling AIM with an operator strategy that ensures that AIM is a standard component of SIM specification through an industry body such as the GSMA would result in AIM being available on all newly issued SIMs and retrofitted to existing SIMs. AIM is service provider agnostic and as such can be loaded during SIM manufacture and securely activated through a simple process which mirrors those processes used to activate bank cards today.
- Simplicity: From the MNO's perspective appeal of the AIM is its simplicity and the fact that it can operate in a standalone capacity if required. This capability ensures that AIM can work with minimal support from the MNO, reuse the existing SIM an issuance and management processes; thus removing the need for expensive partnerships with trusted service managers. From a service provider's perspective ease of use is also a driving factor. AIM consumers can build standalone services by getting Issuer approval of their applications and the AIM CA's certificate. More sophisticated applications can be built through agreements with other AIM ecosystem players.
- Multiple use cases: AIM is not specific for one scenario or application. The generic nature of AIM ensures that it can be integrates many use cases beyond that of the payments industry.
- Security: Due the very secure nature of the SIM, applications utilizing it are assured levels of security comparable to those being enjoyed by existing EMV applications on plastic cards. AIM can seal any instructions issued by that consumer in a manner that allows a recipient to validate if the information they receive has been tampered with.
- Operate Offline: Since AIM is designed to authenticate locally, the mobile device hosting AIM does not need to be connected to the mobile network when being used to deliver a service. AIM can validate the authenticity of a remote user even when the mobile device is not connected to the network The dependencies for connectivity are driven by the service and the service client. In short the output from AIM is self-validating with all the information needed to validate an AIM response being present in the response, meaning that the recipient does not need to reach out to an external party for confirmation of the data sent to them by AIM.
- Low cost mobile devices: Current applications that bypass the SIM to use software based security services or another hardware mechanism based on an embedded secure element suffer from high handset cost. Returning security management to the SIM ensures that these services are available to all GSM devices. Moreover, AIM relies on omnipresence achieved through the incorporation of this technology into the core specifications of the operator SIM. AIM doesn't rely on expensive OTA processes involving costly partners such as the TSM to load the application to the SIM.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1 shows a block diagram of the AIM ecosystem (secure hosting environment) according to one embodiment of the present invention.
Figure 2 shows a diagram with the operational interactions between the different AIM entities according to an embodiment of the invention.
Figure 3 shows a block diagram of the OTA deployment infrastructure according to an embodiment of the invention.
Figure 4a shows an overview of the flow diagram in the use case of registering an user according to an embodiment of the invention.
Figure 4b shows an overview of the AIM activation infrastructure according to an embodiment of the invention.
Figure 5a shows an overview of the flow diagram in the use case of anonymous mode service binding according to an embodiment of the invention.
Figure 5b shows an overview of the flow diagram in the use case of Non Validated/Validated mode service binding according to an embodiment of the invention.
Figure 6 shows an overview of the flow diagram in the use case of powered secure payment token pull according to an embodiment of the invention.
Figure 7 shows an overview of the flow diagram in the use case of authenticated HCE based NFC transaction according to an embodiment of the invention.
Figure 8a shows an overview of the flow diagram in the use case of secured online payment with PAN with no AIM secure channel according to an embodiment of the invention.
Figure 8b shows an overview of the flow diagram in the use case of secured online payment with PAN with AIM secure channel according to an embodiment of the invention.
Figure 9 shows an overview of the flow diagram in the use case of AIM Authenticated Cloud Based Account Debit according to an embodiment of the invention.
Figure 10 shows an overview of the flow diagram in the use case of AIM Powered Magnetic Data Point of Sale according to an embodiment of the invention.
Figure 11 shows an overview of the flow diagram in the use case of AIM Powered P2P Payment - Recipient Phone Number Known to Sender. according to an embodiment of the invention.

### DETAILED DESCRIPTION OF THE INVENTION

The invention describes a method system and application for, in general terms, authenticating users, guaranteeing both the integrity and confidentiality of transactions information or instructions provided by that user and ensure the integrity of transactions. The acronym AIM will be used to refer to the proposed technology and to the SIM based application that is central to the concept.

Authenticity, Integrity and Confidentiality are vital to the success of any scheme because:
1. In any risk management scenario the ability to ascertain the authenticity of a remote individual or device is essential when making decisions that may result in the transfer of liability. The AIM is thus tasked with ensuring that any entity relying on it can determine not only the authenticity of the AIM they are talking too but also the person to whom the AIM belongs.
2. Integrity is paramount within any decision making process. If the decision maker can be sure that the information he/she is being supplied, and on which he/she will be basing a decision, has not been altered then that decision maker can better assess the risk they are exposing themselves to when making the required decision.
3. Without confidentiality and the guaranteed protection of an individual's secrets; Authenticity or Integrity cannot be assured. To this end AIM is tasked with ensuring the confidentiality of any cryptographic keys or data it requires to maintain integrity and authenticate a user.

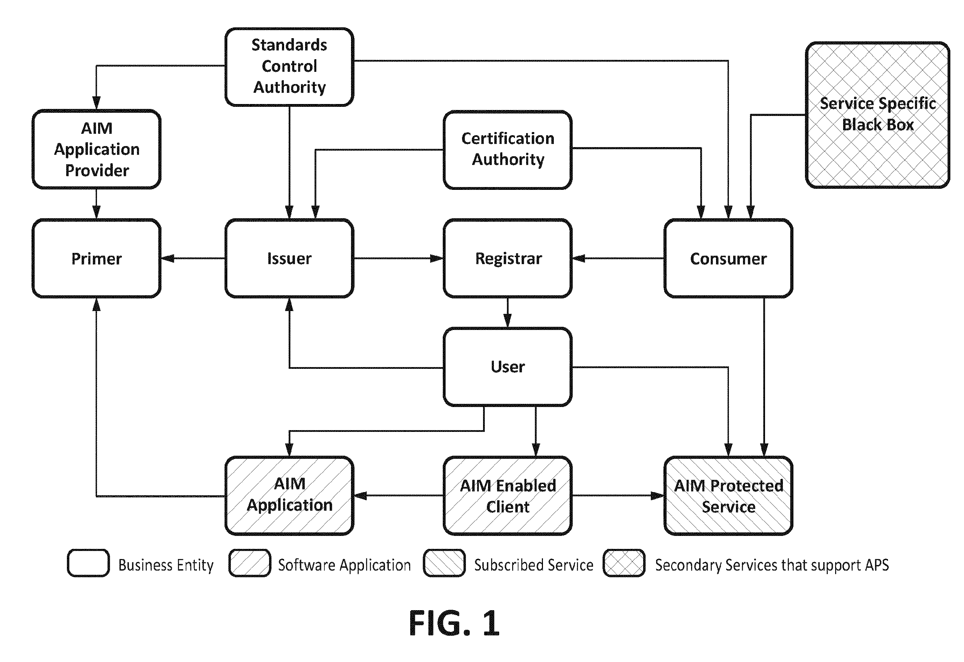

Whilst AIM can work in a standalone mode it does benefit from inclusion into a defined secured environment ("ecosystem") and parts of that ecosystem can combine to enrich the abilities of AIM. According to an embodiment, the AIM ecosystem consists of a number of administrative roles/functions and technical components as disclosed in figure 1.

According to an embodiment, the roles within AIM ecosystem may be (some of them are mandatory and some of them are optional):
Standards Control Authority: Ubiquity and interoperability are vital in the integration of AIM into mainstream use cases. The Standards Control Authority (SCA) is responsible for owning the technical specification and defining the rules and regulations and regulations under which AIM will operate.
AIM Primer (AP): The AIM Primer is responsible for the creation of an AIM instance and initializing it in advance of activation. The AIM Primer is thus responsible for loading the unique and confidential AIM keys belonging to the issuer and Initial UVM key/PIN, setting and guaranteeing uniqueness of AIM ID and Performing AIM initialization within a controlled environment either in situ or via an OTA process.
AIM Issuer (Al): It is the entity responsible for providing the hosting environment for an AIM instance and the management of the AIM lifecycle. It may be the Mobile Network Operator. In other words, the AIM Issuer can be seen as the mobile operator who has issued the AIM and with whom the AIM user has a business relationship. The AIM issuer must make AIM available on their devices and support the processes needed to activate an AIM instance, support Registration, manage the AIM Lifecycle, control AIM Reset and manage the revocation of all AIM IDs, AIM PINs and PKC's reported to be compromised. The AIM issuer also holds a direct relationship the AIM User in the form of a mobile subscription.
AIM Certification Authority (CA): It is responsible for establishing the chain of trust necessary to enable an AIM Consumer to validate an AIM response. As such the AIM CA will provide the root certificate that will be used to sign all MNO public keys that in turn sign AIM certificates. In addition to this the CA is tasked with ensuring only approved consumers can load keys to AIM.
AIM Consumer (AC): It is any relaying party who incorporates AIM into their products or service and delegates some or all of the Authentication and Integrity management components of their service to AIM and it is reliant on the information generated by AIM
AIM registrar: It is responsible for registering AIM users and Consumers and for the assertion or provision of a user's identity. The responsibilities of the registrar may include validating an AIM User's identity against internal references for Non-Validated usage, executing external Know Your Customer (KYC) processes necessary for Validated AIM use cases, maintaining the relationship between the AIM ID and the AIM User's real world identity, confirmation and provision of an AIM User's identity attributes, registering Consumers and Issuing Consumer credentials.
AIM User: The individual to whom an AIM has been issued and who has initialized the AIM with their own PIN. It is the principle owner of an AIM instance and is responsible for requesting activation of the AIM, initializing it with their personal AIM PIN and/or a unique UVM key and binding it to any aim protected services that they subscribe to.
Application Provider: It is the entity who decides to implement AIM and provide Issuers or Primers with a realization of the AIM technical specification defined by the SCA (Standards Control Authority).
Service specific black box: It is composed by the business entities, infrastructures and technical components that allow an AIM user to consume the AIM protected service (e.g a payment service).

According to an embodiment, the more active components/roles within AIM ecosystem may be:
AIM application: It is the SIM based application (functional module) that can manage user authentication and transactional integrity using its internal attributes, personal keys and/or keys loaded to it by an AIM consumer. So it is a SIM based authenticity and integrity management application. Each AIM instance has a globally unique identity and can be associated with single or multiple services through a service provider process coupled with service APIs exposed by the issuer.
AIM Enabled Client (AEC): It is an application that can be downloaded to a mobile device and which allows a user to access services provided by an AIM Consumer. The AEC delegates user authentication and transactional integrity management to the AIM application stored on the SIM of its host device (mobile device).
AIM Protected Service (APS): It refers to any service provided by a business entity that delegates user authentication to AIM. The type and nature of the service is inconsequential for AIM as long as the service provider uses the AIM SDK to access an AIM instance through a certified client application.

To reach the targets of Authenticity, Integrity and Confidentiality, AIM possesses a several discreet capabilities and employs attributes which are designed to propagate integrity, prove authenticity and maintain confidentiality. These along with the secure environment on the host device and the secure processes used to issue and manage the AIM, result in integrity being baked into the solution. The following sections describe the Attributes and Capabilities and other interesting AIM aspects that are designed to make AIM secure and help meet its above mentioned targets.

### AIM Attributes:

Now several attributes are going to be listed. It is not mandatory to use all the attributes in all the AIM embodiments; according to the specific application where AIM is going to be applied some of this attributes will be used and some of them not. Usually AIM attributes fall into four categories, depending on which entity can set the attributes:
Issuer Defined Attributes (IDA): They are controlled by the AIM issuer and set during the provisioning process and are not known to the consumer or the user.
   AIM ID: As part of the chain of trust each AIM can be linked to the Integrated Circuits Component Identifier (ICCID) or International Mobile Subscriber Identity (IMSI) of the SIM card it is hosted on; alternatively it can be seeded with a unique identity. It is a mandatory require that the AIM ID be able to uniquely identify an AIM instance within the global GSM domain.
   AIM MAC Key - AMK: Each AIM instance is loaded with a Message Authentication Code (MAC) key. The MAC key is used by the external security management entities to authorize commands that permanently change the state of the AIM instance or load data to be used in a secure function.
   AIM Unique Key - AUK: Each AIM instance is seeded with a unique asymmetric AIM key, the public part of this key is installed in the form of the AIM public key certificate signed by the issuer. The AIM PKC shall be made available to all parties needing to validate an AIM signature or send confidential data to an aim application. The private component of the AIM key, as required by the RSA algorithm is held securely by AIM and never divulged to external parties. The AIM PKC and unique key are the basis of AIM's ability to manage confidentiality and ensure integrity.
   AIM Signature: The AIM signature would be calculated using the AIM signing key over the data sent as part of an authentication command and include the authentication outcome. This attribute would allow a relying party to validate the status of the message being sent to it and trust the authentication status of the AIM user.
   Authentication State: The Authentication State would be calculated by the AIM on each request to execute UVM. The state would be a binary indication defining whether the user had managed to satisfy the conditions of the chosen UVM, e.g. entered the correct PIN.
   The AIM PUK - APUK: In order to manage simple and effective AIM unblocking, in scenarios where an AIM has been locked by due to PIN retry limits being exceeded, each AIM possess a unique PIN Unblock Key (PUK). The PUK is used by the issuer, following an appropriate user authentication (through a customer support process) to allow a genuine user to reset their AIM PIN. The PUK is loaded during the AIM provisioning process and securely held by the MNO using the same processes employed to protect existing SIM PUKs.
   Issuer Public Key Certificate - IPKC: The AIM Issuer Public Key Certificate is used in conjunction with the AIM's own public key certificate. It is loaded to the AIM by the issuer to enable validation of the AIM public key certificate through the Certification Authority controlled Public Key Infrastructure (PKI). The issuer public key certificate is signed by the certification authority.
   AIM Activation Key - AAK: The issuer sends the AIM Activation Key to the AIM instance in response to an activation request. The key is loaded to the AIM under the protection of the AIM unique key and its loading is authorized via a command MAC generated from the MAC key. Once loaded the key is used to validate the activation code sent to the user.
   Usage Mode: AIM operates in three modes subject to the level of information held by the operator. Each mode gives an indication of the extent to which the issuer knows the user, the information that the issuer can provide on that user and the level to which that information has been validated. The usage mode defines which mode the AIM is being used in and conveyed to the consumer as an indicator of the level of risk they are taking using the AIM data.
   Issuer Application Signing Key - IASK: The issuer application signing key is used to control access to AIM from unapproved AIM enabled client applications. Application providers and consumers alike must ensure that their clients are signed by the appropriate issuer application signing key before their application will be allowed to communicate with an AIM instance loaded to a device's SIM. A hash of the issuer application signing key is loaded to access controller of the host SIM by the issuer.
   Verification Retry Counters Limits: AIM supports a number of User Verification Methods (UVMs) Each UVM method is supported by a counter that controls the number of incorrect attempts that an AIM user may have before the application becomes. The issuer is able to set upper limits for each of the instance controlled retry counters as for example a PIN Try Counter Limit which defines the number of consecutive incorrect PIN entries that a user is allowed to have before the AIM is blocked, a UVM Key Try Counter Limit which defines the number of consecutive incorrect UVM entries that a user is allowed to have before the AIM is blocked and a Cumulative Retry Counter Limit which defines the number of consecutive incorrect authentication requests on either user verification method that may be submitted before the AIM is blocked.
Instance Set Attributes (ISA): They are self-generated by the AIM application once activated on the SIM and are unknown to any external parties.
   AIM LMK: The AIM Local Master Key is internally generated by each AIM instance on first use or activation. The AMLK is a symmetric key and used in to protect local data for an AIM client.
   AIM Verification Result: The AIM Verification Result (AVR) is a bitwise data value that is dynamically set by the AIM following each execution of a command. The AVR is returned as part of the AIM response to authentication commands and indicates which verification method was used, authentication state and the user verification method used along with other processing data.
   Verification Retry Counters: To manage the maximum number of UVM tries AIM supports a number of counters. The counters track the number of incorrect UVM attempts that an AIM user has made and are checked against the limit set by the issuer. If a limit is exceeded the AIM instance is blocked. The counters supported within in an AIM and set by the instance are: PIN Try Counter which counts the number of consecutive incorrect PIN entries that a user has made, UVM Key Try Counter which counts the number of consecutive incorrect UVM entries that a user has made and Cumulative Retry Counter which counts the number of consecutive incorrect authentication requests on either user verification method that have been submitted by the user.
   Activation Number: The activation number is a randomly generated number that is used by AIM and the activation server to generate an activation code.
   AIM Transaction Counter: To ensure the uniqueness of each response the AIM borrows techniques from the world of EMV. Each AIM is loaded with a transaction counter that is appended to the data over which the response signature is calculated and that is incremented after each transaction command. This technique ensures that a response cannot be replayed and that the digital signature for two identical authentication requests would always differ.
User Controlled Attributes (UCA): They are personal to the AIM user and set as part of the activation procedure by the user.
   AIM PIN: Since AIM supports PIN verification as a default UVM each AIM instance is initialized with a unique PIN must be changed by the AIM User on activation. The AIM PIN will be used to validate AIM instances using the default AIM UVM.
   AIM UVM Key: The AIM UVM key is designed to allow the AIM user and designers to supplement PIN verification with another UVM such as biometrics. The AIM is designed to support any comparative UVMs that require the matching of a dynamically captured data set against a reference value calculated during the initialisation process. The AIM user must first authenticate to the AIM via the AIM PIN before he/she is allowed to set the AIM UVM Key. The AIM UVM key will consist of the reference data needed to execute the UVM; this could be a finger print outline, facial map, etc.
Consumer Controlled Attributes (CCA): They are owned by the service provider (consumer) who is integrating AIM into their product or service solution and are not known to the user or the issuer.
   Client Session Key - CSK: The client session key will be loaded by those clients needing AIM to manage a secure session with a remote host. The key shall be loaded using a protected command and with the protected data block encrypted using the AIM unique key. AIM clients must authenticate the remote host sending the session key. Multiple session keys may be loaded subject to the capabilities of the AIM implementation.
   AIM Token Key - ATK: The AIM token key will be loaded by those clients needing AIM to perform tokenised payment functions. The token key is loaded using a protected command with the key being delivered in the protected data block under the AIM unique key. AIM clients must authenticate the host sending the token key. Multiple token keys may be loaded subject to the capabilities of the AIM implementation.
   General Purpose Keys - GPK: AIM provides generic symmetric functions to enable session management. Consumers may load their own keys to AIM under the protection of the AIM unique key using commands validated through the MAC for use in their own proprietary applications. These keys may be used in conjunction with the generic Encrypt, Decrypt, Sign and Hash functions support by AIM.
   Unpredictable Number: The unpredictable number is a 4 byte value that is sent in along with selected AIM commands and included in the integrity control block of an AIM response.

### AIM Capabilities:

Strong User Verification: The primary question on any remote decision makers mind is whether the person making a request is who they say they are. The AIM is designed to implement strong user verification methods (UVMs). Whilst the actual UVM is a matter of design choice any method employed by the AIM designer benefits from the inherent security of the hosting environment and since the SIM is a secure even a rudimentary AIM implementation requiring validation of a default personal identification number (PIN) can still be considered strong. Each AIM instance is equipped with a default UVM, namely PIN verification, but can be extended to use any comparative UVM by initialization of the UVM Key. Thus the tamperproof environment within which the AIM operates ensures that not only is the execution of the authentication algorithm secure but so is any reference data that the authentication process relies on.

Integrity Assurance: Both data and process integrity are managed by the AIM resulting in the AIM being able to guarantee the integrity of itself and responses to authentication requests that it provides. The AIM is designed to use cryptographic algorithms to sign data responses. These digital signatures guarantee data integrity and the AIM solution relies on Public Key Cryptography and the creation of a Public Key Infrastructure (PKI) to achieve this. The PKI results in two component parts that manage integrity for the AIM.
1. Unique Key: Each AIM is seeded with a unique asymmetric key (a type of cryptographic key that has a public and a private component) and that key is used to digitally sign all the authentication response data generated by the AIM. This mechanism allows authentication requests from a client application to contain a data payload. The AIM can sign that payload with its unique key returning not only the data signature but an indication of the user's authorisation status to the client application. To allow self-validation the AIM provides a copy of its Public Key Certificate (PKC) to all clients allowing the client application or recipient of the response to validate the signature and determine whether that response has been tampered with.
2. Public Key Infrastructure: Using techniques borrowed from EMV offline data authentication a chain of trust is established and maintained through the PKI. The issuer appoints a certification authority to provide an issuer PKC. The AIM's PKC key is then signed using the MNOs certificate during SIM manufacture or AIM provisioning. The chain of trust ensures that the recipient is able to first validate the issuer PKC. The issuer PKC can then be used to validate the AIM PKC retrieved from the AIM If all certificates are proven to be authentic then the recipient is free to validate the AIM response signature by extracting the AIM public key from its PKC. Successful validation AIM signature confirms data integrity as well affirming the authenticity of the AIM.

Security & Lockout Processes: In addition to the cryptographic security AIM is responsible for policing its own security and lockout procedures. In very simple terms the AIM would manage its own PIN/ UVM retry counters and these counters would be locked securely within the SIM. As such if a retry counter is exceeded it cannot be reset by anyone other than then MNO. The retry counter management processes are a design choice.

### AIM Operational Model:

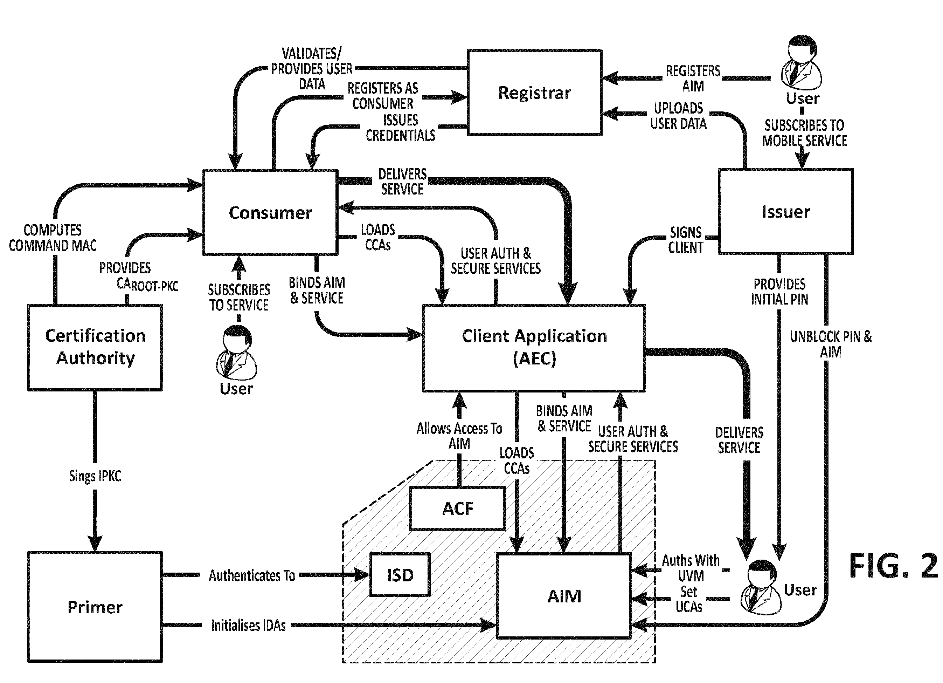

For a better comprehension of the AIM operation, in figure 2, it is shown some of the interactions between the different AIM entities (functional elements) according to an embodiment of the invention. In the following table, it is summarized the actions (functions) each entity requires for other entities and the actions (functions) each entity provides. This is only an example, not all the actions shown are mandatory in all embodiments of the invention.

| **Entity** | **Requires** | **Provides** |
|---|---|---|
| AIM application | Primer to set IDAs for issuer | Authentication services to the |
| | Primer to authenticate to ISD | AEC |
| | Consumer to set CCA | Secure services to the AEC |
| | User to Set PIN and/or UVM KEY | including |
| | | • Generic AIM services |
| | User to Authenticate to it | • Payment / Application specific services |
| | Consumer to bind service | |
| AEC (AIM enabled client application) | AIM application to authenticate user | Delivers service to user |
| | | Binds protected service with |
| | AIM application to provide | AIM |
| | generic and application specific secure services | User interface for authentication commands |
| | Issuer to sign | |
| | ACF to permit access to AIM | |
| | Consumer to deliver service to user | |
| | Consumer to bind protected service to AIM | |
| | Issuer to sign and approve it | |
| ACF (Access Control File) | Knowledge of Issuer signing key | AEC's access to AIM |
| ISD (Issuer Security Domain) | Shared domain keys | Primer ability to load and provision Aim on SIM |
| Registrar | User to register their identities | Credentials to Consumer |
| | Consumers to register | Identity Data to Registered Consumers |
| | Subscriber data from the Issuer Consumer Relationship Management | |
| | Relationship with issuer | |
| Issuer | A business relationship with the User | Mobile subscription to users AIM application |
| | A business relationship with a Primer | SIM |
| | | Application approval services to Consumers |
| | An Application Signing Key | |
| | Ownership of the ISD keys | User data to registrars |
| Consumer | A business relationship with the user | Service to user via AEC |
| | | CCA's to AIM AEC |
| | The CA to MAC commands | |
| | The CA Root certificate | |
| | Consumer Credentials from registrar | |
| | AIM to secure protected service | |
| | Issuer to sign/ approve AEC | |
| Certification Authority | CA root certificate | CA root certificate for AIM response validation |
| | Relationship with issuer | |
| | Consumer credentials from registered consumers | Issuer public key certificate |
| | | MAC computation services. |
| Primer | Relationship with Issuer | Secure loading and provisioning services to AIM |
| | Knowledge of ISD key | |
| | CA to sign Issuer Keys | |

### Other interesting AIM aspects:

Confidentiality via the Unique Key: Since the AIM is seeded with a unique asymmetric key pair, it is possible for the AIM to receive confidential data from external entities. The AIM achieves this by freely sharing its own PKC. The PKC, as well as being able to validate data signatures, can be used to encipher data in a way that only the AIM can decipher. This technique ensures that the AIM can receive data from remote parties in a secure manner without the need to establish a shared secret.

External Key Load & Storage under a Unique Key: AIM employs the principle of a self-generated localized master key to protected local data in a way that is independent of the devices capabilities. This allows these devices to run secure services even if they don't have any native support for cryptographic functions. The local master key (LMK) never leaves the AIM instance or the SIM and is unknown to all external entities since it is self-generated by the AIM on activation. AIM encrypts data under this key and stores it outside of the SIM without risk of compromise. If the data is of a sensitive nature application providers can use this feature in conjunction with the AIM unique key to provide end-to-security for the data on route to their application as well having on going protection for that data once stored in their application.

Protected Commands and the MAC: AIM is designed to hold and protected data, however to prevent unauthorized access to specific commands AIM employs the technique for protected commands. Protected commands do not specifically indicate that the data in a command is sensitive. Protected commands are those that can only be issued by an authorized entity. AIM uses the concept of a message authentication code (MAC) that is attached to the command and allows the AIM to identify the origin of the command and whether the person sending the command is authorised to do so.

External Key Load with the Authority of the Certification Authority (CA): AIM uses the message authentication code or MAC to control the usage of sensitive commands. AIM uses the MAC key in conjunction with the CA to ensure that only authorized or approved entities can load keys to the application. This coupled with the confidentiality provided by the unique key ensures that only the AIM consumer and AIM know the value of the third party keys.

Session & Session Key Management: With the ability to securely load and use external keys AIM is able to manage secure channels for its client application. Using the ability to securely receive a key from a remote host, AIM can use that key as Master Derivation Key (MDK) and combine it with agreed session data to generate session keys (short lived symmetric cryptographic keys ). The sessions may then be used to encrypt data traffic between the client application and its remote host, sign messages from the client application to the remote host and validate commands sent from the remote host to the client application. Optionally, the AIM can ensure that client side secure sessions are only initiated by an authorized user through execution of the UVM

General Cryptographic Functions: AIM provides generic security functions to both the user and consumer. These functions may be for example, data encryption, decryption, signature or hash generation, for any client application whose owner has loaded a general purpose key to AIM.

Payment Token Management: To facilitate tokenized payment applications AIM support specific keys and functionality. For token generation, AIM is designed to support localized token generation services for any payment application that use tokens in the conduct of payments. AIM may support two integration methods for token generation algorithms: Fully Integrated Algorithm (has been hardcoded into the AIM application code) and Extension Algorithm (external algorithms that are integrated into AIM over a shareable interface and hosted within the SIM as an independent application). AIM can also secure payment tokens using its own internal master key and in a manner that requires the users to authenticate themselves before the token is released for use. Payment scheme specific algorithms or processing flows may be integrated into AIM using similar techniques as the used for Payment Token Management.

Self-Validating Response Messages: AIM commands may be based for example on standardized ISO 7816 Application Protocol Data Units (APDU) with proprietary class designations as required. AIM commands are designed to elicit an appropriate AIM response and the operational commands are designed to allow AIM clients to send proprietary data to the AIM for processing and digital signature. The AIM Authentication command and others that return a digital signature in the response, are unique in their ability to allow a remote host to self-validate the response without recourse to the issuer.

In the command message, the Command Block (CB) contains the low level instruction APDU (application protocol data unit) that defines the operations being requested by a client application. AIM commands are designed to support a client application specific Command Payload (CP) for example encoded within a Tag Length Variable (TLV) (used to detect the presence and size of command payload inside a command APDU). The TLV can also indicate if the command data contains protected and unprotected data. Subject to the command type the CP can contain both protected data (encrypted under a key known to AIM, using for example either the AIM unique key, AIM Local Key or a consumer loaded key) and unprotected data (not encrypted). The Control Authority Block (CAB) encodes the command message authentication code which is generated by AIM CA and calculated by concatenating the CB and the CP and applying the selected generation algorithm using the AIM MAC key.

The response includes, the AIM Processing Outcome Block (POB) is key the integrity assurance provided by an AIM instance. The POB is encoded with the result of processing the requested command, along with the protected response data (data that has been processed as part of the command operation and encrypted with the AIM unique key, AIM Local Key or a consumer loaded key) and unprotected response data (data that has been processed as part of the command operation and returned in the clear by the AIM) and the AIM Signature. The Replay Check Block (RCB) encodes a value that ensure uniqueness of the AIM signature and guarantees that the signature will not be the same for two identical commands irrespective of the value of the POB and AUS. The AIM and User Status (AUS), is the outcome of processing the command. The AUS also returns the user's authentication status in scenarios where the command was required to process a selected authentication algorithm. The AIM signature is returned in the Integrity Check Block (ICB) and used to provide remote entities with the assurance required to establish the integrity of the AIM response. The AIM signature can be used by AIM consumers to validate the integrity of the responses from an AIM instance. The signature is calculated by the application of an appropriate signing algorithm to a concatenation of the POB, RPB and the AUS. The signature is generated with the AIM unique key. The AIM signature ensures that a relying party can trust the authentication status of the AIM user as returned in the POB as well as being assured that data has not been tampered with.

### AIM Usage Modes:

AIM is designed to be used in a number of distinct modes. Depending on the degree of information or assurance required by the AIM Consumer an AIM instance can be activated with varying options. Each mode offers a greater degree of assurance in terms of the processes used to validate an AIM user's identity and the information available to the issuer.
Anonymous User: In this mode, no specific steps are taken by the MNO to validate the identity of an AIM user. Any mobile subscriber, even those holding pre-paid or linked accounts, may apply for activation of their AIM as long as they can prove they are in control of the device (e.g. by the receipt and entry of an appropriate OTAC) that is being activated. In other words, no AIM user data has been captured or validated doing registration. Non-Validated User: It covers all scenarios where the identity of the AIM user is validated against the details being held by the MNO alone. As such this type of usage will automatically be available to all post-paid account holders and can be made available to pre-paid, linked or corporate account users if the user is willing to register their details with the issuing MNO. Validation is performed by the AIM Registration Authority against the MNO's Customer Relationship Management (CRM) database. In other words, the AIM user identity has been confirmed against the AIM issuer own CRM data during registration. In some instances the data in the CRM will have been externally validated through indirect methods such as direct debits or registration processes that demand the presentation of physical proofs of identity at the MNO's retail premises.
Validated User: It offers the highest level of assurance to an AIM Consumer. As well as being able to rely on the trust established by the strength of the AIM initialization and distribution process, recipients of a validated mode response can be assured that the AIM registration authority (AIM issuer) has carried during registration of the AIM user, external KYC (Know Your Customer) checks on the identity of the AIM User, which are run against independent data sources such as the electoral role or credit reference agencies. As a value added service validated usage can support additional real-time validation beyond that contained within the AIM response, such as identity attribute checks, through the AIM Registrar.

### AIM Reliability:

The reliability of the proposed solution (AIM) is based in some aspects/features derived from existing established criteria. Some of these features are:
1. Secure Production & Initialization Processes: The AIM is designed to be installed as part of SIM manufacturer or using a secure over the air delivery. All set-up and provisioning of the AIM application is done within a safe controlled environment with all sensitive data being kept encrypted at all times. The AIM application may be added to the standard profile of the SIM (so it can be loaded securely during SIM manufacture guaranteeing that the integrity of the application and its data at all times). Finally once loaded to the SIM the underlying SIM platforms, such as GlobalPlatform, mandate that commands which alter the state of an application are authenticated. As such only the legitimate owner of the AIM, i.e. the MNO who issued it in this case, would be able to open a secure channel to the AIM. The need to open a secure channel results lifecycle events, such as PIN Reset and AIM Reset being executed in a highly secure manner by the MNO or their appointed agent.
2. Robust Activation & Registration Procedures: The AIM solution is also designed with the added security of being able to register a user's details through a Registration authority who is capable of validating those details if required. All AIM activation processes ensure that the individual requesting activation is in control of the device within which the AIM is being activated. The strength of the activation process can be enhanced by using one of the registration modes supported by AIM. The AIM activation processes thus ensure that the AIM PIN and UVM key are loaded by the individual in control of the device and where necessary can validate the identity of that person allowing consumers to trust AIM responses in both anonymous and registered scenarios.
3. Tamperproof Hosting Environment: The AIM takes advantage of several environmental features available within today's devices which extend the security already available through hosting the AIM within the SIM and controlling access to it via hardware based mechanisms.
   a. SIM Based Security: Since the AIM is hosted within the SIM it benefits from all the security afforded by a device of this nature. Operating systems such as GlobalPlatform not only ensure physical and logical security of the AIM and its data but also provide secure protocols that can control which clients are allowed to access the applications they host. Thus using the Access Control File (ACF) or Access Rule Application (ARA) protocols designed to secure wallet communications with NFC payment applications, the AIM host can effectively police which client applications can communicate with AIM.
   b. Trusted Execution Environment: The power of AIM can be enhanced through the use of a Trusted Execution Environment (TEE) already created (for example KNOX for Android). This would ensure, for example, that the AIM would execute its UVM in a Pin Entry Device (PED) like environment.
4. The AIM Certification Authority: The AIM Certification Authority is tasked with creating and maintaining the chain of trust needed to allow consumers to trust the response from an AIM and the safety of their assets, ensuring that all unique AIM PKC are signed with the IPKC signed which is in turn signed with the AIM CA root (the CA's root PKC is available to all AIM consumers as is common practice in well-established PKIs) and all sensitive commands are authorised through the application of a command MAC. As such consumers are safe in the knowledge that only trusted users can load keys to the Aim and that AIM will keep these separate. No User Specific Data: AIM is designed not to hold any data relating to its user. That data stored within the AIM application and its attributes are designed to identify the AIM and ensure its uniqueness and allow the execution of secure functions. As such in the very unlikely event of AIM being compromised there is no risk of any user data being compromised. AIM relies on its issuer to store the details of the owner safely in the cloud. In cases where the recipient of an AIM response required details of the AIM user the consumer can retrieve that data from the issuer or the data that the consumer providing the service gathered during the service subscription. AIM requires that the service provider, i.e. the consumer, to hold the association between the AIM ID and the protected service or account.
5. Two Factor Authentication: Since the AIM requires the user (to be authenticated) to be in possession of the mobile device (the host SIM to be precise) and have knowledge of the AIM UVM key or PIN, AIM satisfies the established criteria of two factor authentication. These factors combine to amplify the strength of the authentication being performed by the AIM and ensure AIM authentication is truly two factor.
6. Immunity to Single Key Compromise: The fact that each AIM is seeded with a unique key results in immunity from suffering significant exposure in situations where a key is compromised (single key compromise). Since the unique AIM key is specific to a single AIM instance, if that instance were compromised, then only the compromised AIM would be impacted. The remainder of the AIM estate would still be safe.
7. Controlled Access: Access to an AIM application is controlled through existing mechanisms on the SIM. These include the use of an Access Control File (ACF) or Access Rules Application (ARA) in conjunction with the issuer signing key to ensure that only approved client applications can be access AIM capabilities.

### Issuance and Lifecycle Management:

The AIM is can operate in a standalone manner for the majority of it lifetime with little or no input from the issuing MNO. AIM does however require a lightweight infrastructure, leveraging some existing processes, complimented with new processes to issue AIM and manage the AIM lifecycle. The processes necessary to issuance and manage AIM are described below:
Manufacture: The AIM is designed to be an addition to the SIM profiles of the MNO (Mobile Network Operator). Each MNO has a proprietary SIM configuration that is loaded onto a generic SIM platform provided by a SIM Vendor. The MNO may make the AIM part of their SIM configuration such that the AIM is loaded to all that operators SIMs during the manufacturing process. The SIM vendor (taking the role of the AIM Primer) will be responsible for loading the unique AIM keys, creating the AIM PKC, setting the initial PIN and loading the PUK to the AIM. The AIM ID and PUK information is returned to the MNO in the returns files which flow from the SIM vendor to the MNO as part of the current SIM production process. The initial AIM PIN would be held back by the SIM vendor and used in the activation process.
Issuance: AIM applications can be issued through traditional SIM issuance where AIM will be issued through the existing MNO SIM issuing processes by default. As such all new subscribers would automatically obtain an AIM enabled SIM when taking out a new subscription or receiving a new SIM as a result of a lost and stolen report. Users wishing to upgrade to an AIM enabled SIM could also obtain it through a SIM swap process.

AIM can also be issued through a streamlined over the air (OTA) process. OTA AIM issuance can be achieved using a localised loading agent that is distributed alongside an AIM client. The OTA provisioning mechanism described is reliant on the AIM being located under the Issuer Security Domain (ISD, that can be regarded as an entity on a GlobalPlatform SIM that represents the owner of the SIM) and based on the principle that once the AIM has been loaded to and instantiated on the SIM the only personalization required is the initialization of the AIM Keys, Initial PIN and AIM ID. Since the AIM is hosted under the ISD, the issues associated with content management modes are moot and GlobalPlatform Amendments needed to support NFC SIM payments applications unnecessary.
Activation: Users would request activation of their AIM through the AIM issuer. The activation request would trigger business case related processes but most importantly the AIM Issuer would ask the SIM vendor or holder of the initial PIN to send that information to the user. This could be achieved via PIN mailer or SMS but would be predicated on the user's ability to validate their identity via an MNO specific process in accordance with the rules of the target usage mode. The activation process would differ for each usage mode however the environment required to achieve activation would be the same. Finally the activation could be achieved through a dial up customer support dial process or through the use of an AIM Activator embedded into the AIM client.
PIN Reset: The process is similar to that currently used by the MNO to reset the SIM PIN. In the event of a user blocking their AIM through repeated authentication failure the PUK would be used to unlock the AIM.
AIM Reset: To support recycling or pass down of SIM amongst AIM users the reset process is used to reinitialize an AIM application. Under this proposal an existing AIM instance would be reloaded with the AIM ID, the AIM Unique Key and PKC and the AIM PUK. In scenarios where the selected UVM is PIN verification then the AIM pin would also be reinitialized and in all instances the UVM key would be re-initialized. The AIM transaction and retry counters would also be reset in all scenarios.
Revocation: In the event of an AIM going missing as a consequence of it host device being lost / stolen or an AIM PIN being compromised the AIM Issuer will manage a Revocation process, which will provide a hotlist of compromised AIM IDs and revoked AIM PKCs to all AIM consumers who utilize AIM in a registered state. The revocation lists will enable AIM consumers to eliminate false decisions through the acceptance of responses from compromised AIMs. This mechanism is much the same as that used by the payments industry to manage compromised payment cards.

### Service Binding:

AIM is designed to allow an external application or service provider to delegate user authentication and transactional integrity management to AIM. In order to allow delegation to take place the AIM Consumer must be approved or registered with the registrar and include the AIM SDK (Software Development Kit) into their mobile service client. AIM enabled clients can bind irrespective of the usage mode of the AIM they are binding too. Those consumers wanting to validate user details with the issuer during the bind must be registered and AIM must be operating in Non-Validated or Validated mode. The only mandatory requirement is that the consumer process authenticates the user via AIM during the service bind.

Under the Anonymous mode binding process a registered AIM Consumer can bind any service to an AIM instance. The AIM consumer is responsible for performing their own Know Your Customer (KYC) processes on their subscriber and can use their knowledge of the subscriber to complete the binding operation and validate the subscriber's identity. (An example of a typical flow where an anonymous AIM user binds AIM to their service will be shown later in the correspondent use case).

In the Validated/ Non Validated Mode Bind, the registered consumers can bind their service to AIM and delegate security. In doing so their registered status allows them to supplement user validation with the user data attributes collected during the user registration or mobile subscription process. (An example of a typical flow where a validated AIM user binds AIM to their service will be shown later in the correspondent user case).

### Stand Alone Use:

Whilst AIM is designed for use within a wider ecosystem certain functions with AIM can be used in a standalone capacity. Standalone operation gives a consumer access to at least the following set of limited capabilities:
1. User Authentication
2. Receipt of secure information under the AIM unique key
3. Secure localized storage of data under the AIM local master key.
Consumers wanting to employ AIM in a standalone capacity must: Ensure their client application is approved and signed by the issuer That they obtain the CA root certification from the AIM CA.

### AIM use cases.

AIM supports numerous use cases in different embodiments of the invention; these use cases can and do support differing scenarios.

Now, some AIM use cases are going to be listed and explained, but these use cases are only an example and the present invention is not limited to these use cases. Due to the independent nature of AIM it can be applied to any application that requires the management of data integrity, confidentiality and user authentication on a mobile device. In addition to mobile use AIM, if required, can be used within fixed web scenarios through the exposure of the web services supported by the MNO AIM service APIs. AIM is thus applicable to financial services, Identity management and Access control. AIM is a component application that "compliments" and "enhances" the fundamental uses cases within areas of Financial Services, Identity and Access control.

The AIM use cases may be categorized as "Base" use cases (those that describe the tasks necessary to support the distribution and management of AIM; including things such as registration, discovery, PIN reset, etc) and "Commercial" use cases (those that are enabled by AIM and for which the AIM Issuer could potentially charge a fee building viable business cases).

### Use case 1: AIM Deployment

It is possible to deploy AIM in one of two ways. AIM can be deployed as part of the SIM production process or through an optional over-the-air (OTA) process in scenarios where a mobile network operator (MNO) possesses a compatible SIM estate (OTA is only applicable to SIMs with sufficient memory to host the AIM. Native SIMs cannot be dynamically updated).

In the first case AIM application is distributed along with the SIM. Since AIM is generic and AIM security is based on its own unique secrets, the SIM vendor has all the information necessary to load AIM to an MNO's SIMs during the manufacturing process (initializing the AIM on a SIM before it is shipped to the mobile operator).

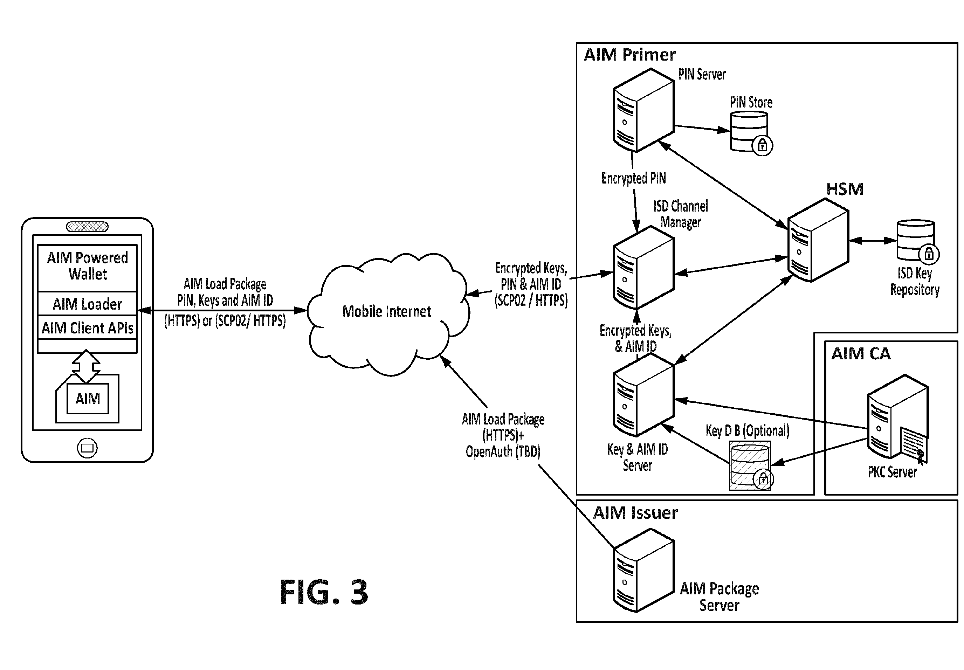

In the second case (OTA process), as a consequence of the security model implemented within AIM a Trusted Service Manager (TSM) is not required to represent the service provider. AIM download and initialization can be triggered through a mandatory component present in the AIM Client known as the AIM loader. Relying on the AIM instance being hosted under the issuer security domain (ISD) the AIM Loader can pull the AIM load package from an online server using a secure access protocol then load and install it onto the SIM. Once installed the AIM instance can be initialized securely by the AIM loader in conjunction with other servers hosted by the Aim Primer. The AIM loader is responsible for fetching the AIM ID, AIM Unique Key and initial PIN from the AIM Primer and loading these to the AIM. In figure 3, a block diagram of the OTA deployment infrastructure (also called "issuing environment") is shown.

In an embodiment, the steps taken to make the OTA Deployment are:

| |
|---|
| AIM user requests AIM set-up through his/her AIM enabled client to the AIM Loader |
| AIM Loader embedded within AIM Clients fetches AIM load package from AIM Package Server. |
| AIM Loader initiates secure channel to SIM by getting secure channel data from SIM. |
| AIM Loader requests secure channel set-up from AIM ISD Channel Manager. |
| ISD channel manager creates secure channel response and sends it to AIM loader. |
| AIM loader requests secure channel to SIM by applying secure channel response from ISD channel manager. |
| SIM Opens secure channel with ISD channel manager. |
| AIM loader installs AIM over secure channel. It implies several exchanges between the ISD channel manager, AIM loader and SIM (It has been compacted into a single step for clarity) |
| AIM loader request initialization data from ISD channel manager consisting of AIM ID, AIM Key and Initial PIN protected under secure channel session keys. |
| ISD channel manager requests initial PIN from PIN server. |
| PIN server returns PIN. |
| ISD channel manager requests AIM Unique key from Key server. |
| Key server generates AIM unique key. |
| Key server requests AIM Public Key Certificate (PKC) from AIM CA. |
| AIM CA creates AIM PKC by signing AIM public key with MNO PKC. |
| AIM PKC returned to key server. |
| AIM Unique key and PKC returned to ISD channel manager by key server. |
| AIM ID generated by ISD channel manager and checked for uniqueness |
| AIM initialization script created by ISD channel manager and protected with agreed secure channel keys. |
| AIM initialization script returned to AIM loader by ISD channel manager. |
| AIM initialization script applied to AIM by AIM loader |
| AIM Instance installs initialization values contained in script. |
| Initialization completed and AIM loader informed. |
| AIM Loader closes secure channel to SIM. |

Once the AIM is deployed, having being loaded in the SIM (in the manufacturing process or via an OTA process, potential AIM users must be able to find out about AIM, its uses and availability (ensuring that users are aware of, and can find out about AIM). In order to do that, a AIM acquisition path must be enabled in order to allow the user to determine if their SIM is AIM enabled, AIM capable or whether a SIM swap is required.

### Use case 2: Registering for AIM:

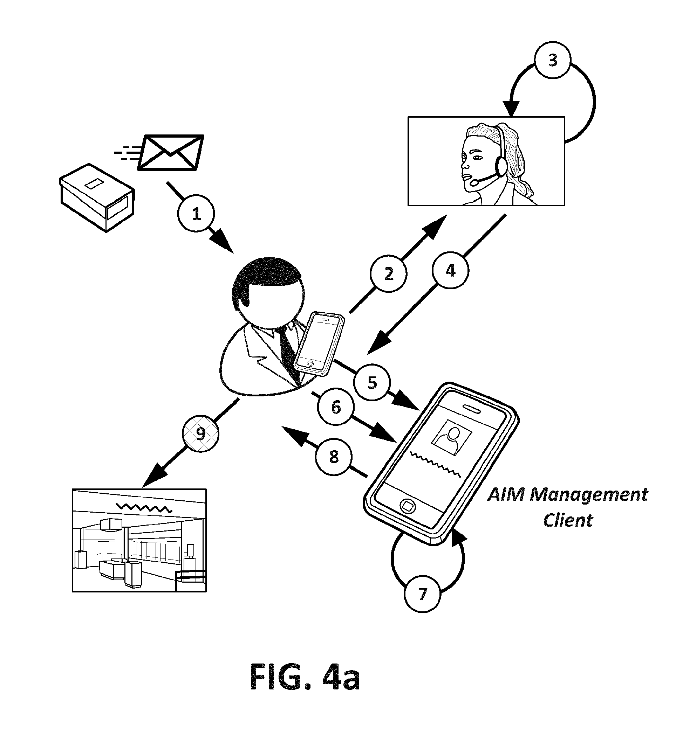

Registering for AIM is simple, since AIM is on every SIM card and since operators has details of AIM phone subscriber captured during contract set-up procedure. Strength of ID validation can also be increased through optional process to validate user documentation in store. In figure 4a, it is shown a general overview of the different steps to perform this action according to a simple embodiment of the invention. Said steps are explained in the following table:

| | |
|---|---|
| 1 | User receives his AIM enabled SIM |
| 2 | User contacts issuer (for example, a call center of the mobile network operator) to request AIM activation |
| 3 | The issuer validates phone user against account data |
| 4 | On successful validation the issuer sends initial AIM PIN to user |
| 5 | Aim user launches AIM client in the mobile phone and it is asked to enter initial PIN and optionally to Set a new PIN (for security reasons) |
| 6 | User enters new PIN |
| 7 | Aim validates initial PIN and then rotates PIN to the new value |
| 8 | User is informed of PIN changes and AIM is ready to use. Before being ready to use, there could be an additional step (9, optional) where AIM user must present passport or other photo ID at operator retail outlet (for example phone shop) as an additional security measure. |

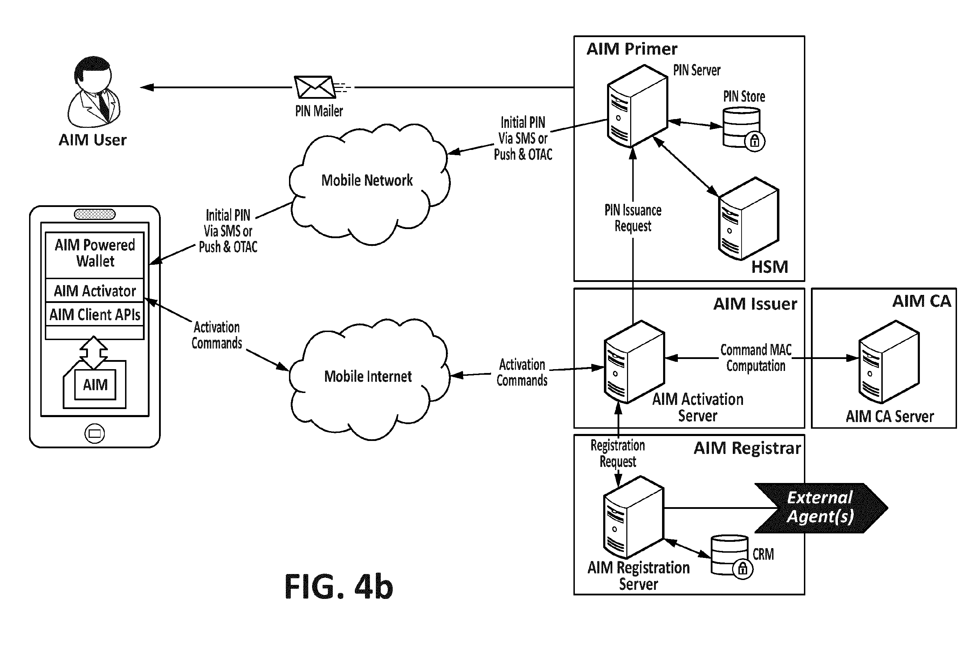

However, as explained before AIM can be used in a number of modes. As such each or the three usage modes will require an appropriate registration/activation sequence with the registration being upgradeable from Anonymous use to Validated. Since AIM is shipped in an active state the act of registration and the receipt of the initial AIM PIN is synonymous with activation and the registration process serves as activate AIM. AIM activation is triggered through a mandatory AIM client component referred to as the AIM activator.. For the purposes of simplicity only the client application pull registration path will be described at this stage. The infrastructure required, according to an embodiment of the invention, to activate AIM through a client pull is shown in Figure 4b.

Anonymous mode usage is defined as AIM utilization without any validation of the AIM user's identity. The MNO confirms the MSISDN and device on which the AIM is activated and underwrites the activation process. Following activation the AIM can assert the authenticity of the person who enters the initial PIN or who used the initial PIN to set a new value. AIM consumers delegating services to an AIM operating in anonymous mode are responsible for validating the user. The AIM Issuer will ensure that the AIM is reachable through the phone number associated with that AIM through the relationship between the International Mobil Subscriber Identity (IMSI) extracted from the SIM hosting the AIM, the AIM ID and phone number. According to an embodiment, the steps performed for Anonymous mode Activation (registration) are indicated in the following table:

| | |
|---|---|
| 1 | AIM user requests anonymous mode activation through his/her AIM enabled client |
| 2 | AIM requests activation data from AIM application using ACTIVATE Command |
| 3 | AIM generates activation request |
| 4 | Activation Number, PKC, AIM ID and IMSI returned by AIM |
| 5 | AIM Activator builds activation request |
| 6 | Request for activation key sent to AIM activations server by AIM activator |
| 7 | Activation server validates AIM PKC then generates and encrypts activation key with AIM PKC, and prepares SET KEY command |
| 8 | Activation server requests computation of protected command MAC from AIM CA |
| 9 | AIM CA computes command MAC |
| 10 | MAC SET KEY command with encrypted activation key returned by CA |
| 11 | Activation script containing MACed SET KEY command returned to AIM activator |
| 12 | AIM activator executes SET KEY command |
| 13 | AIM validated command MAC and installs activation key |
| 14 | Activation number returned by AIM |
| 15 | AIM activator prepares request for activation code, with AIM ID, IMSI and Activation Number |
| 16 | AIM request anonymous activation code |
| 17 | Activation server validates request |
| 18 | Activation server generates Activation code using Activation key and Activation Number |
| 19 | Activation server fetches MSISDN for AIM ID / IMSI |
| 20 | Activation server sends activation code to recovered IMSI over SMS channel |
| 21 | Activation code is displayed to user on mobile device |
| 22 | Activation server requests initial PIN to be sent to recovered MSISDN |
| 23 | User enters Activation code into AIM Activator |
| 24 | Activator sends Activation command and activation code to AIM |
| 25 | AIM validates activation code using activation key, activation number |
| 26 | On successful validation of activation code AIM activates in Anonymous mode |
| 27 | AIM primer extracts initial PIN from PIN database |
| 28 | AIM Primer send Initial PIN via SMS to MSISDN supplied by activation server |
| 29 | User request PIN rotation |
| 30 | AIM activator sends SET PIN command with new and old PIN |
| 31 | If initial PIN matches old PIN, new PIN is set. |

Non-Validated Usage occurs when the details of an AIM user are bound to that user during registration. As well as validating control of the device the MNO checks information provided by the user against that held by the MNO in their internal Customer Relationship Management (CRM) database. According to an embodiment, the steps performed for Non-Validated mode Activation (registration) are indicated in the following table:

| | |
|---|---|
| 1 | AIM user requests Non-Validated mode activation through his/her AIM enabled client |
| 2 | AIM requests activation data from AIM using ACTIVATE Command |
| 3 | AIM generates activation request |
| 4 | Activation Number, PKC, AIM ID and IMSI returned by AIM |
| 5 | AIM Activator builds activation request |
| 6 | Request for activation key sent to AIM activations server by AIM activator |
| 7 | Activation server validates AIM PKC then generates and encrypts activation key with AIM PKC, and prepares SET KEY command |
| 8 | Activation server requests computation of protected command MAC from AIM CA |
| 9 | AIM CA computes command MAC |
| 10 | MAC SET KEY command with encrypted activation key returned by CA |
| 11 | Activation script containing MACed SET KEY command returned to AIM activator |
| 12 | AIM activator executes SET KEY command |
| 13 | AIM validated command MAC and installs activation key |
| 14 | Activation number returned by AIM |
| 15 | AIM activator asks AIM user to enter personal details mandated by MNO. |
| 16 | Registrant enters requested details into client application. |
| 17 | AIM activator extracts IMSI from SIM, AIM ID and registration number then combines these with requested user details to build registration request. |
| 18 | Non-validated mode registration request is sent to AIM Activation server by AIM Activator. |
| 19 | AIM Activation server validates registration request and checks AIM ID and IMSI. |
| 20 | AIM Activation server requests validation of user details from AIM Registration server. |
| 21 | AIM Registration server validates user details against MNO's internal CRM database. |
| 22 | Validation result returned to activation server |
| 23 | Activation server generates activation code using Activation number and Activation key |
| 24 | Activation server caches user data and activation code in temporary database |
| 25 | AIM Activation server fetches MSISDN linked to IMSI from MNO data. |
| 26 | Activation code sent to device using SMS to recovered MSISDN |
| 27 | Activation code display to user |
| 28 | AIM user enters activation code into his/her AIM client |
| 29 | AIM activator requests activation with activation code. |
| 30 | AIM validates activation code using activation number and activation key |
| 31 | AIM Activates in non-validated mode |
| 32 | AIM response returned indicating activation in non-validated mode + signed bind request |
| 33 | Activator requests registration and bind of user |
| 34 | Activation server validates bind request |
| 35 | Activation servers requests bind of user details to AIM ID |
| 36 | Registration server binds AIM ID to user details and commits to database |
| 37 | Registration server confirms registration success. Note if registration is unsuccessful PIN will not be issued and registration will fail. |
| 38 | Activation server calculates Bind Code using Activation Key and Activation Code |
| 39 | If registration is successful activation server request issuance of initial PIN to AIM user. |
| 40 | Registration confirmation and Bind code sent to AIM activator |
| 41 | Bind code sent to AIM |
| 42 | AIM validates Bind code using activation code and activation key |
| 43 | AIM set PIN flag to rotate allowing PIN to be set by user |
| 44 | Registration confirmed by AIM Activator |
| 45 | Registration outcome displayed to user |
| 46 | AIM Primer locates initial PIN based on AIM ID sent in issuance request. |
| 47 | AIM Primer sends initial PIN to AIM User (AIM user must rotate PIN). |

Validated mode is achieved when the AIM user's identity is validated by the MNO against official external data sources. Validated mode can be used by an AIM consumer to supplement or replace their own KYC process. According to an embodiment, the steps performed for Validated mode Activation (registration) are indicated in the following table:

| | |
|---|---|
| 1 | AIM user requests Non-Validated mode activation through his/her AIM enabled client |
| 2 | AIM requests activation data from AIM using ACTIVATE Command |
| 3 | AIM generates activation request |
| 4 | Activation Number, PKC, AIM ID and IMSI returned by AIM |
| 5 | AIM Activator builds activation request |
| 6 | Request for activation key sent to AIM activations server by AIM activator |
| 7 | Activation server validates AIM PKC then generates and encrypts activation key with AIM PKC, and prepares SET KEY command |
| 8 | Activation server requests computation of protected command MAC from AIM CA |
| 9 | AIM CA computes command MAC |
| 10 | MAC SET KEY command with encrypted activation key returned by CA |
| 11 | Activation script containing MACed SET KEY command returned to AIM activator |
| 12 | AIM activator executes SET KEY command |
| 13 | AIM validated command MAC and installs activation key |
| 14 | Activation number returned by AIM |
| 15 | AIM activator asks AIM user to enter personal details mandated by MNO. |
| 16 | Registrant enters requested details into client application. |
| 17 | AIM activator extracts IMSI from SIM, AIM ID and registration number then combines these with requested user details to build registration request. |
| 18 | Non-validated mode registration request is sent to AIM Activation server by AIM Activator. |
| 19 | AIM Activation server validates registration request and checks AIM ID and IMSI. |
| 20 | AIM Activation server requests validation of user details from AIM Registration server. |
| 21 | AIM Registration server validates user details against MNO's internal CRM database. |
| 22 | External KYC process executed and results combined with internal validation |
| 23 | Validation result returned to activation server |
| 24 | Activation server generates activation code using Activation number and Activation key |
| 25 | Activation server caches user data and activation code in temporary database |
| 26 | AIM Activation server fetches MSISDN linked to IMSI from MNO data. |
| 27 | Activation code sent to device using SMS to recovered MSISDN |
| 28 | Activation code display to user |
| 29 | AIM user enters activation code into his/her AIM client |
| 30 | AIM activator requests activation with activation code. |
| 31 | AIM validates activation code using activation number and activation key |
| 32 | AIM Activates in validated mode |
| 33 | AIM response returned indicating activation in non-validated mode + signed bind request |
| 34 | Activator requests registration and bind of user |
| 35 | Activation server validates bind request |
| 36 | Activation servers requests bind of user details to AIM ID |
| 37 | Registration server binds AIM ID to user details and commits to database |
| 38 | Registration server confirms registration success. Note if registration is unsuccessful PIN will not be issued and registration will fail. |
| 39 | Activation server calculates Bind Code using Activation Key and Activation Code |
| 40 | If registration is successful activation server request issuance of initial PIN to AIM user. |
| 41 | Registration confirmation and Bind code sent to AIM activator |
| 42 | Bind code sent to AIM |
| 43 | AIM validates Bind code using activation code and activation key |
| 44 | AIM set PIN flag to rotate allowing PIN to be set by user |
| 45 | Registration confirmed by AIM Activator |
| 46 | Registration outcome displayed to user |
| 47 | AIM Primer locates initial PIN based on AIM ID sent in issuance request. |
| 48 | AIM Primer sends initial PIN to AIM User. Note AIM user must rotate PIN. |

### User case 3: AIM Reset:

AIM users can request re-initialization of their AIM. AIM Reset will re-initialize the key AIM attributes loading a new AIM unique key and AIM ID to the instance. AIM Reset maybe requested for three reasons; suspected compromise of the AIM, SIM inheritance or Anonymous mode PIN block.

Under situations where an AIM users suspect that their AIM has been compromised , e.g. PIN compromise through shoulder surfing attack, that user may apply to have their AIM reset. A successful reset will result in the resetting of the AIM ID, AIM Unique Key, AIM PKC and AIM transaction counter. In addition to this the original AIM ID will be placed on the revocation list and may be circulated to all registered AIM consumers in real-time. The timeframe for placing the AIM ID on the revocation list will be defined by the agreements between the AIM issuer and registered AIM Consumers

SIM inheritance covers those scenarios where an AIM user is handing down their SIM to another subscriber, (e.g. friends, relative, other corporate users recycling corporate accounts, Parent to child...). In said situations, user may apply to have their AIM reset. A successful reset will result in the resetting of the AIM ID, AIM Unique Key, AIM PKC and AIM transaction counter. In addition to this the original AIM ID will be placed on the revocation list and circulated to all registered AIM consumers. If AIM Reset is requested as a consequence of SIM inheritance the registration/activation will be required on the part of the new user.

In situations where an anonymous mode user has blocked their AIM PIN the user may apply for the AIM to be reset. A successful reset will result in the re-initialization of the AIM ID, AIM Unique Key, AIM PKC, AIM PIN and transaction counters. In addition to this the PIN retry counter will also be cleared and the PIN block removed.

### User case 4: AIM PIN Reset:

AIM users can request a PIN reset in scenarios where they have managed to lock their AIM due to a forgotten PIN. This base use case it driven through the MNO helpdesk and authenticates the user prior to reset in accordance with the selected usage mode. For reasons of security AIM Reset can only be initiated through the operator's helpdesk.

For users of AIM in the anonymous mode PIN reset is not supported. Users must utilize the AIM reset process to re-initialize their entire AIM in order to reactivate it. This approach deliberately forces the AIM user to re-establish any binding that may have existed with their blocked AIM instance allowing relying parties to re-evaluate the identity of the user, thus guarding against AIM hijack.

For users of AIM in one of the registered modes (Non-validated or validated) the PIN may be reset by authenticating to the MNO helpdesk. Successful authentication against the helpdesk will result in a PIN reset notification being sent to AIM by the AIM Primer. The AIM primer will also issue the updated PIN to the AIM user via the selected channel, i.e. SMS or PIN mailer. If required this scenario can be modified to allow the AIM user to set a new PIN directly through and enhanced PIN Unblock command.

### User case 5: AIM Revocation:

AIM Revocation results in the AIM PKC and AIM ID being entered into a deny list that is circulated amongst all registered AIM Consumers. Revocation maybe be requested for by users in lost and stolen scenarios, deregistration from a service or SIM inheritance. This base use case covers those scenarios.

In scenarios where a device is lost or stolen users may contact their operator's helpdesk to initiate revocation of their AIM. Successful revocation will result in the AIM ID being placed on the revocation list along with the AIM PKC. The revocation list will be updated and circulated in accordance with the operator's service level agreements with registered AIM consumers.

Any AIM user wanting to unregister for the AIM service may do so by invoking the unsubscribe command within their AIM client. The AIM user will be required to authenticate to their AIM using the AIM PIN when issuing this command. The AIM will provide a signed AIM response that is sent to the AIM Issuer. Successful validation of the AIM deregistration response will result in the AIM ID and AIM PKC being put on the revocation list. The AIM Issuer will circulate the updated revocation list as part of a daily batch process.

In situations of SIM inheritance the AIM user must execute the registration command. The revocation process along with the effect will be identical to that of deregistration.

Due to the nature of the functions provided by AIM; reinstatement of a revoked AIM usually is not be supported due to the inherent security risks. AIM certificates and AIM identities shall be permanently disabled if revoked

All the above cases were "Base" Use cases. Now, some "Commercial" Use cases are going to be presented.

### Use case 6: Consumer Registration

AIM Consumers / Service providers can register with an AIM issuer. Registered users will receive regular updates in terms of the AIM Revocation list and subject to commercial agreements may be granted access to the identity data held by the AIM Issuer. The latter is only available for non-validated and validated usage mode. Details of anonymous user cannot be shared.

### Use case 7: AIM Service Binding

AIM may be used by any service provider where that service provider needs to ascertain the authenticity of a remote subscriber and ensure integrity of the instructions form that subscriber. This commercial use case allows a service provider to bind their service to a registered AIM such that the AIM user can employ AIM as their chosen authentication mechanism to any service. Two service binding scenarios are covered by this use case with each being enhanced by the service provider being a registered AIM Consumer:

### Anonymous Mode Service Binding:

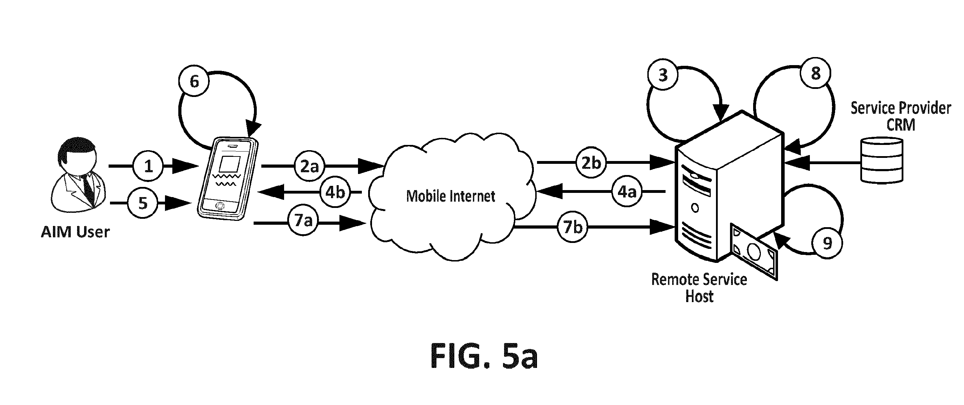

Figure 5a shows an overview of the flow diagram in the use case of anonymous mode service binding according to an embodiment of the invention. Security is guaranteed to the AIM consumer through their registration with the AIM Issuer and can be enhanced through registration with the issuing MNO in order to receive AIM ID hotlists. This use case assumes that the service provider's registration and KYC process has captured confidential data that can be used to validate their subscriber through a challenge response process. The steps taken, shown in figure 5a, are:

| | |
|---|---|
| 1 | AIM User invokes bind process in his AIM enabled service client. |
| 2 a,b | AIM enabled service requests service provider challenge (for example a secret question as date of birth, name...) and registration key, citing service account reference |
| 3 | Service provider host validates account reference and generates challenge for client application based on account status / validity. |
| 4 a,b | Service provider host challenge is returned to AIM enabled service client. |
| 5 | AIM user completes challenge and authenticates to AIM using his/her AIM PIN and sends service provider challenge to AIM in authentication command payload. |
| 6 | AIM validates PIN and on successful entry signs service provider challenge, Authentication state and AIM ID to send in AIM response. |
| 7 a,b | AIM response is returned to remote service host. |
| 8 | Remote service host validates AIM response, checks AIM ID against hotlist and checks answer to service provider challenge against internal CRM data. |
| 9 | On successful validation of challenge responses and with positive authentication response in AIM response remote service host binds AIM ID to subscribers account. |

The table above is a brief summary of the main steps taken, in the following table, a more detailed list of the necessary steps is provided:

| |
|---|
| AIM user requests binding on AIM enabled service to his/her AIM |
| AIM user's request is sent to Consumer Service Host |
| Consumer service host validates message from client applications and selects user verification data to be requested from internally known data. |
| User validation data request is returned to client application |
| AIM user is asked to enter data requested by consumer host |
| AIM user enters or confirms requested data |
| User is prompted to enter AIM PIN |
| User Enters AIM PIN |
| AIM enabled client prepares VERIFY PIN command data |
| VERIFY PIN command with user entered data and AIM PIN sent to AIM |
| AIM Verifies PIN and sets authentication status in AVR |
| User Data block from verify command, AIM ID and AVR signed with AUK |
| Signed data including AIM ID and AVR returned to client application |
| Client application downloads AIM PKC and IPKC from AIM |
| AIM PKC and IPKC from AIM retuned top client |
| Client application builds proprietary bind command with AIM data |
| Bind request sent to consumer host |
| Consumer host validates AIM PKC |
| Consumer host validates AIM signature |
| Consumer host validates AVR - Authentication states |
| Consumer host validates user data returned in bind request with internal CRM |
| If user data matches and AIM authentication status matches then consumer host binds AIM ID to service |
| Outcome of bind request returned to client application. |

### Validated/Non validated Mode Service Binding:

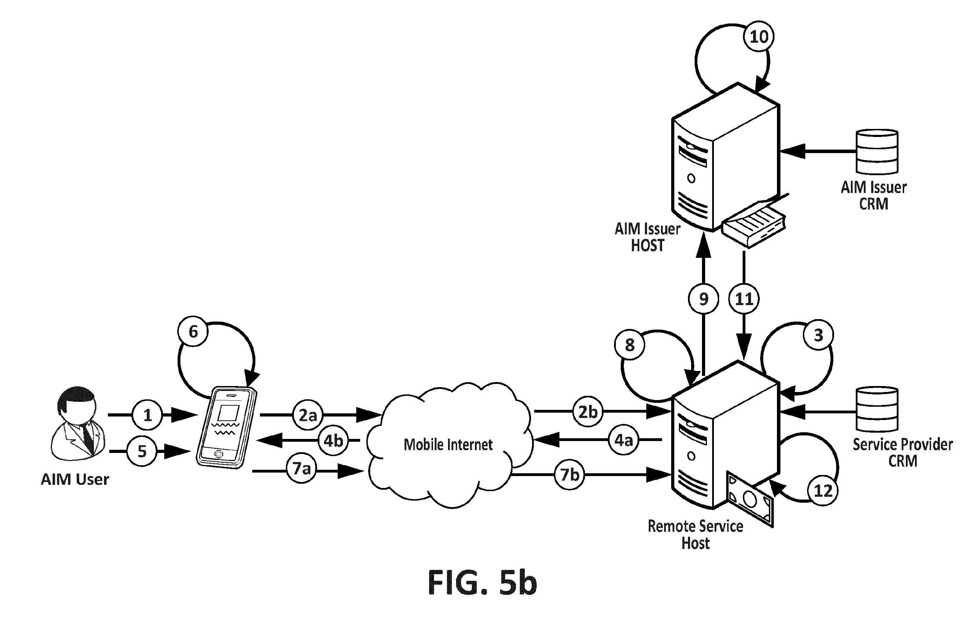

Figure 5b shows an overview of the flow diagram in this use case according to an embodiment of the invention. When AIM is used in a Validated or Non-Validated mode the AIM Issuer has data on the AIM User. Subject to the mode in use that data will have been validated against the AIM issuer's own CRM and official external references. Service providers wanting to delegate part or all of their KYC process to an AIM Issuer along with authentication may do so using this use case. As part of this use case AIM consumers are able to request confirmation or provision of an AIM user's identity. The AIM consumer must be registered in order to complete a service binding in this mode. The steps taken, shown in figure 5b, are:

| | |
|---|---|
| 1 | AIM User invokes bind process in his AIM enabled service client. |
| 2 a,b | AIM enabled service requests service provider challenge and registration key, citing service account reference. |
| 3 | Service provider host validates account reference and generates challenge for client application based on account status / validity. |
| 4 a,b | Service provider host challenge is returned to AIM enabled service client. |
| 5 | AIM user completes challenge and authenticates to AIM using his/her AIM PIN. |
| 6 | AIM validates PIN and on successful entry signs service provider challenge, Authentication state and AIM ID to send in AIM response. |
| 7 a,b | AIM response is returned to remote service host. |
| 8 | Remote service host extracts validates response to service provider challenge returned by service client. |
| 9 | Remote service host extracts AIM ID and requests AIM User Identity and KYC level from AIM Issuer |
| 10 | AIM Issuer host validates AIM Consumer details and extracts AIM user details from CRM to build response for remote service host. |
| 10 | AIM Issuer host returns data to remote service host. |
| 11 | Remote service host validates AIM user identity against internal CRM or accepts AIM user identity in delegated KYC scenarios. |
| 12 | Remote service host binds AIM ID to subscribers account if conditions met. |

The table above is a brief summary of the main steps taken, in the following table, a more detailed list of the necessary steps is provided:

| |
|---|
| AIM user requests binding on AIM enabled service to his/her AIM |
| AIM user's request is sent to Consumer Service Host |
| Consumer service host validates message from client |
| Consumer host request user attributes list from Aim Registrar |
| AIM registrar returns AIM user attributes list |
| Consumer host selects user validation data from internal information and AIM attributes list |
| User validation data request is returned to client application |
| AIM user is asked to enter data requested by consumer host |
| AIM user enters or confirms requested data |
| User is prompted to enter AIM PIN |
| User Enters AIM PIN |
| AIM enabled client prepares VERIFY PIN command data |
| VERIFY PIN command with user entered data and AIM PIN sent to AIM |
| AIM Verifies PIN and sets authentication result in AVR |
| User Data block from verify command, AIM ID and AVR signed with AUK |
| Signed data including AIM ID and AVR returned to client application |
| Client application downloads AIM PKC and IPKC from AIM |
| AIM PKC and IPKC from AIM retuned to client |
| Client applications builds proprietary bind command with AIM data |
| Bind request sent to consumer host |
| Consumer host validates AIM PKC |
| Consumer host validates AIM signature |
| Consumer host validates AVR - Authentication states |
| Consumer host validates user data returned in bind request with internal CRM |
| Consumer host request validation of AIM user attributes |
| AIM registration server validates AIM User attributes |
| Validate user attributes result returned to consumer host |
| If user data matches, AIM authentication status is true and AIM attributes confirmed then consumer host binds AIM ID to service |
| Outcome of bind request returned to client application. |

### HCE (Host Card Emulation), NFC and Tokenisation Commercial use cases:

One of the unaddressed issues currently facing providers of token based Near Field Communications (NFC) solutions for use at the point of sale is token security. AIM can be used to secure tokens allowing safe offline (e.g. the host device is unable to connect to the mobile device) use of token solutions by providing a localised locking mechanism protecting tokens from unauthorised use. The following three use cases define potential uses for AIM that support of face to face NFC transactions. These use cases though commercial will be defined with the "FFC" to differentiate them from other online payment use cases defined later.

### Use case 8: AIM Powered Secure Payment Token Pull:

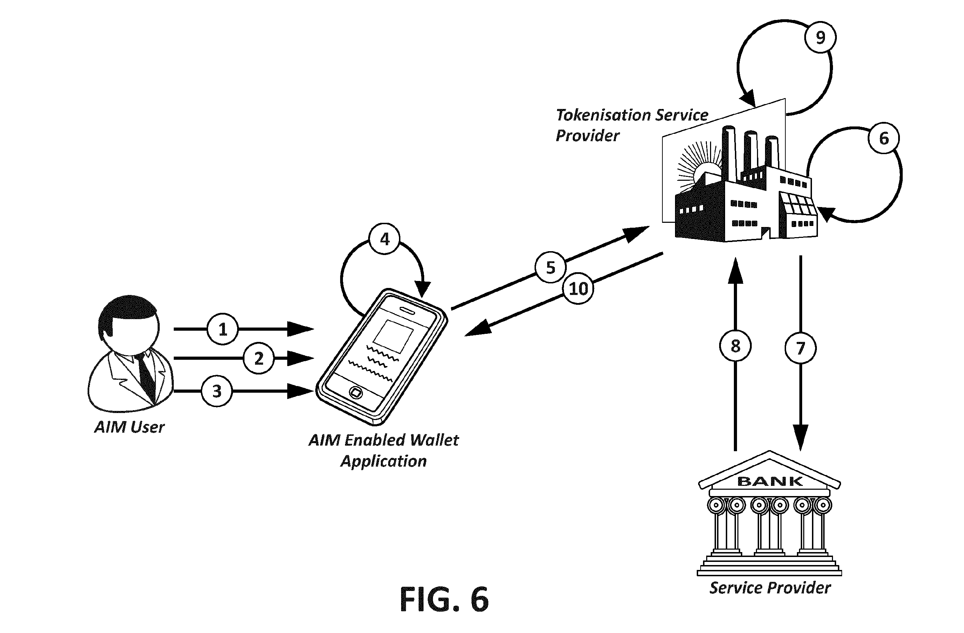

Figure 6 describes a potential AIM use case that could be used to retrieve a tokenized bank card from a service provider via an AIM enabled wallet application. Typical targets for such a use case are banks wishing to launch Host Card Emulation based NFC cards. Alternatively the MNO could build a generic wallet and allow partner banks to load cards to that wallet without the need to include a TSM in the card provisioning process. Previous to this action, the AIM user should have executed Service Bind for his payment service. In this case it is being assumed that the Token Service Provider and the Service Provider are already AIM consumers. The steps are explained in the following table:

| | |
|---|---|
| 1 | AIM user launches his AIM enabled wallet after having bound his AIM and payment service through the previous explained binding process. |
| 2 | User selects load card function and is prompted to enter PAN of card to be added. |
| 3 | User is prompted to enter his card PAN and his AIM PIN to confirm action. |
| 4 | The AIM validates the user PIN and on successful authentication prepares a signed instruction containing card PAN, AIM ID, Authentication Status, AIM PKC and AIM Signature for the TSP requesting card token download. |
| 5 | Wallet application forwards card load instruction to TSP. |
| 6 | TSP validates AIM signature and user authentication status using the AIM PKC sent in the AIM response and chain of trust based on MNO PKC and AIM CA root. |
| 7 | On successful validation of request and user TSP requests card details necessary to create card token from Service Provider (SP). |
| 8 | The SP returns card details to Token service provider. |
| 9 | TSP prepares card token based on information returned by the service provider. |
| 10 | TSP returns card token to wallet application where it is stored for later use. |

### Use case 9: AIM secured Offline Token Vault:

The AIM could participate in the creation of a secure token vault. The previous use case did not go into the specifics of the token storage mechanism. Since the original AIM tokenisation request contained the AIM PKC it is possible for the TSP to encrypt the token using the AIM PKC. With this enhancement to the token pull use case the token itself is by default added to a virtual card vault protected by AIM. The tokens need not be stored in secure memory as they can decrypted (i.e. unlocked) by the AIM prior to use. This process includes mandatory AIM user authentication in any token access use case by default. The use case removes the need for other costly secure elements or storage locations on the device. The steps taken in this use case would be the same steps explained for the previous use case (Use case 8) with the difference that in step 9, the TSP encrypts token with AIM PKC and that there is an additional step where card token is sent by the mobile device to a virtual token vault by default.

### Use case 10: AIM Authenticated HCE based NFC Transaction:

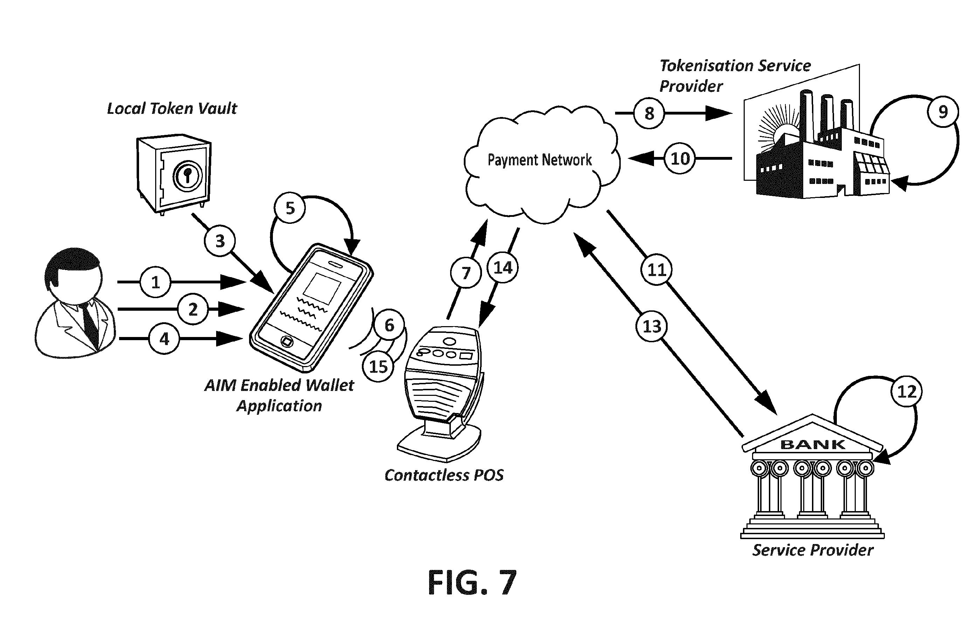

Figure 7 describes how AIM authentication could be used to authenticate a Host Card Emulation (HCE) based NFC transaction. This use case assumes that the payment tokens are stored under a virtual token vault secured by AIM and that the AIM user has bound his payment service and AIM together. The use case also assumes that the AIM wallet supports the capability to conduct the transactions with the payment terminal. Unlocking of the payment token is predicated on the AIM user being able to authenticate against his/her AIM. The use case also assumes that the AIM is part of a wallet solution that supports HCE based NFC payments and that a mechanism exists or can be found to pass the authentication state to the AIM consumer i.e. the bank or their appointed agent. In the use case above it has been assumed that validation of the authentication state is undertaken by the TSP, this step will have to be investigated the solution tailored to meet the requirements of the payment schemes. The steps are explained in the following table:

| | |
|---|---|
| 1 | Registered AIM user launches his AIM enabled wallet. |
| 2 | User selects pay function and is prompted to select token to be used for payment. |
| 3 | Wallet application retrieves selected payment token from local token vault. |
| 4 | The user enters his AIM PIN, this data and locked token are inserted into authentication command and sent to AIM. |
| 5 | AIM validates the AIM pin and on successful validation returns unlocked token and authentication status in AIM response. |
| 6 | The AIM user is prompted to present his/her device to the payment terminal; device and terminal then conduct the NFC payment transaction using the unlocked token. |
| 7 | Transaction authorisation request is posted to payment network. Mechanism for sending AIM response along with authorisation message needs to be agreed with schemes. |
| 8 | Payment network presents authorisation request to TSP for de-tokenisation |
| 9 | TSP retrieves PAN and optionally validates AIM response. |
| 10 | Following successful validation of Authentication state TSP prepares authorisation request and posts it on payment network with token substituted for PAN. |
| 11 | Payment network routes de-tokenised approval request to issuer |
| 12 | Issuer makes approval decision and optionally validates AIM response if not validated by TSP. |
| 13 | Issuer posts approval decision on payment network. Note the additional re-tokenisation step which has been mandated by EMV in their tokenisation specification has been omitted for purposes of clarity |
| 14 | Payment network delivers approval decision to payment terminal. |
| 15 | Wallet is informed of transaction outcome. |

### Use case 11: AIM Secured Offline Card Value:

AIM can immediately enhance the world of online and mobile commerce through the creation of a secure localized card vault. AIM can encrypt conventional PAN and other cards detail so they can be stored safely within a localized card vault, that doesn't require additional hardware security. Since only AIM can decrypt the PAN and due to AIM's ability to manage a secure session these details can be delivered directly to an online processor along with the user's authentication state. The steps taken in this use case, according to an embodiment of the invention, are explained in the following table:
Registered AIM user launches his AIM enabled wallet application.
User selects load card function and is prompted to enter details of card to be added. User enters his AIM PIN to authenticate himself to his AIM application.
The AIM validates the user PIN and encrypts the card data with its unique encryption key returning the result in the response to the wallet application.
Wallet application stores the encrypted card within its local card vault for later authenticated retrieval.

### Use case 12: AIM Secured Online Payment with PAN (Primary Account Number)

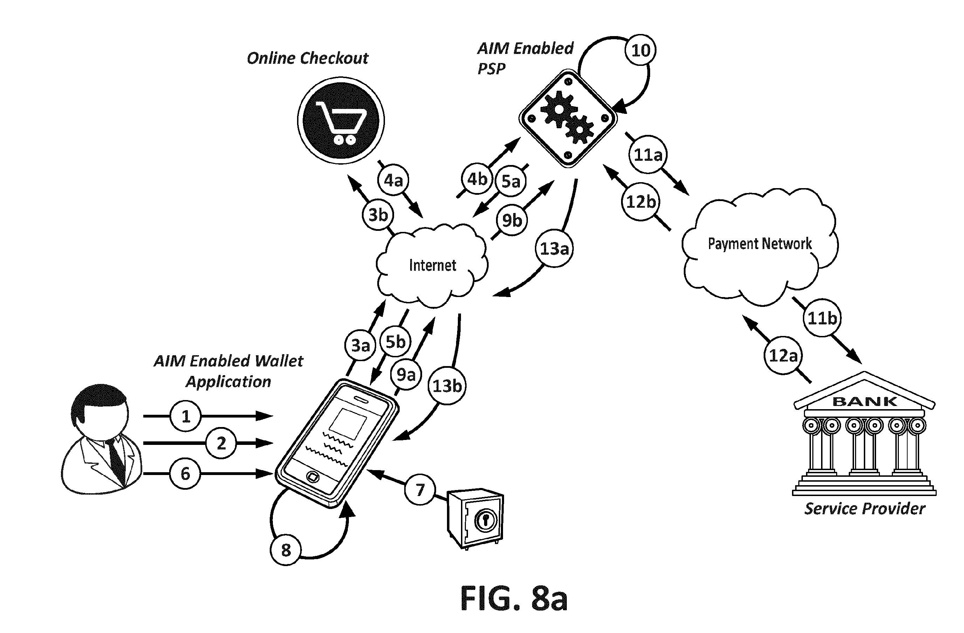

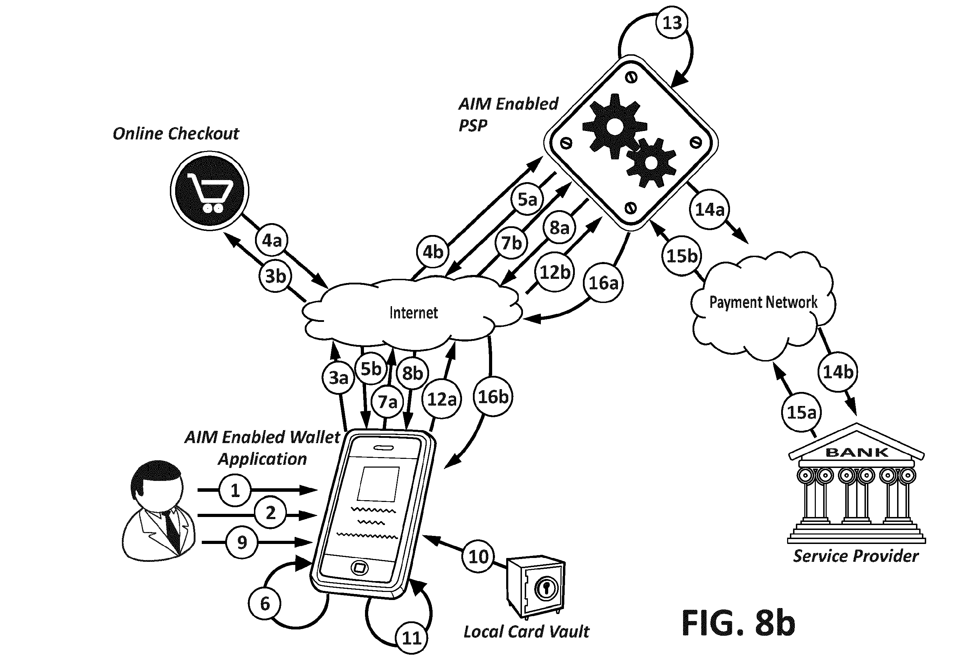

AIM can be used in conjunction with a localized card vault to conduct conventional online payments. Subject to the ability and/or agreements with the merchant AIM can allow those transactions to be conducted securely without the need to enter CVV or perform 3D secure. Figures 8a and 8b describe use cases which achieve this by using the self-validating AIM response and user authentication status in the payload of the message to the PSP (Payment Service Provider). In the proposed solution the PAN is not exposed to the merchant at any time. There two possible PAN based online payment scenarios, one using no AIM secure channel (figure 8a) and one using AIM secure channel (figure 8b).

For the first scenario, the steps are explained in the following table:

| | |
|---|---|
| 1 | Registered AIM user launches his AIM enabled wallet and conducts mobile shopping session. |
| 2 | User selects product and selects checkout |
| 3 a,b | User is redirected to online checkout. |
| 4 a,b | Online checkout request Payment Service Provider (PSP) to take payment. |
| 5 a,b | PSP request card details and confirms purchase amount. |
| 6 | User selects payment card and enters AIM PIN to complete payment instruction. |
| 7 | Wallet application pulls selected card from local card vault and sends card data along with PIN information entered by AIM User to AIM. |
| 8 | AIM validates user PIN and on successful authentication decrypts card details, preparing response message for PSP with user authentication status, AIM ID, AIM PKC and AIM signature. |
| 9 a,b | Card details and AIM response sent to PSP over secure connection. |
| 10 | PSP validates AIM response using the AIM PKC and checks user authentication status. |
| 11 a,b | On successful validation of AIM response and with positive user authentication state PSP posts approval request on payment network for delivery to issuer |
| 12 a,b | Issuer returns approval decision to PSP. |
| 13a, b | PSP informs wallet of transaction outcome. |

For the second scenario, the steps are explained in the following table. This scenario is an enhancement of the previous scenario, using AIM's session management capability (the PSP would be required to send AIM a symmetric session key protected under the AIM PKC. AIM would then use this key to encrypt the card details on route to the PSP).

| | |
|---|---|
| 1 | Registered AIM user launches his AIM enabled wallet and conducts mobile shopping session. |
| 2 | User selects product and selects checkout |
| 3 a,b | User is redirected to online checkout. |
| 4 a,b | Online checkout request PSP to take payment. |
| 5 a,b | PSP Requests AIM PKC |
| 6 | Wallet Application retrieves AIM PKC |
| 7 a,b | AIM PKC returned to PSP |
| 8 a,b | PSP returns session key protected by AIM PKC which is installed in to AIM session manager, confirms payment amount and requests encrypted card details |
| 9 | User selects payment card and enters AIM PIN to complete payment instruction. |
| 10 | Wallet application pulls selected card from local card vault and sends card data along with PIN information entered by AIM User and transaction amount to AIM. |
| 11 | AIM validates user PIN and on successful authentication decrypts card details, preparing response message for PSP with user authentication status, AIM ID, AIM PKC, AIM signature and card details protected by session key. |
| 12 a,b | Card details and AIM response sent to PSP. |
| 13 | PSP validates AIM response using the AIM PKC, checks user authentication status and decrypts card details with agreed session key. |
| 14 a,b | On successful validation of AIM response and with positive user authentication state, PSP posts approval request on payment network for delivery to issuer |
| 15 a,b | Issuer returns approval decision to PSP. |
| 16 a,b | PSP informs wallet of transaction outcome. |

### Use case 13: AIM promotion of CNP transaction to CP

The previous use case (Use case 12) can potentially be enhanced to convert Card no present transaction (CNP) can be converted to card present (CP) by including an additional security layer (in this case agreement with the payment schemes is essential). The steps taken will be the same as shown in figure 8a, but steps 5 & 9 are conducted over a Virtual Private Network (VPN). The VPN effectively extends the domain of the PSP. As such it could be argued that the user and the PSP are in the same logical space and that the transaction is being conducted over a network owned by the PSP. If the schemes (parties) were persuaded to accept this position then it can be accepted that he card is present when the transaction is conducted

### Use case 14: AIM Authenticated Cloud Based Account Debit

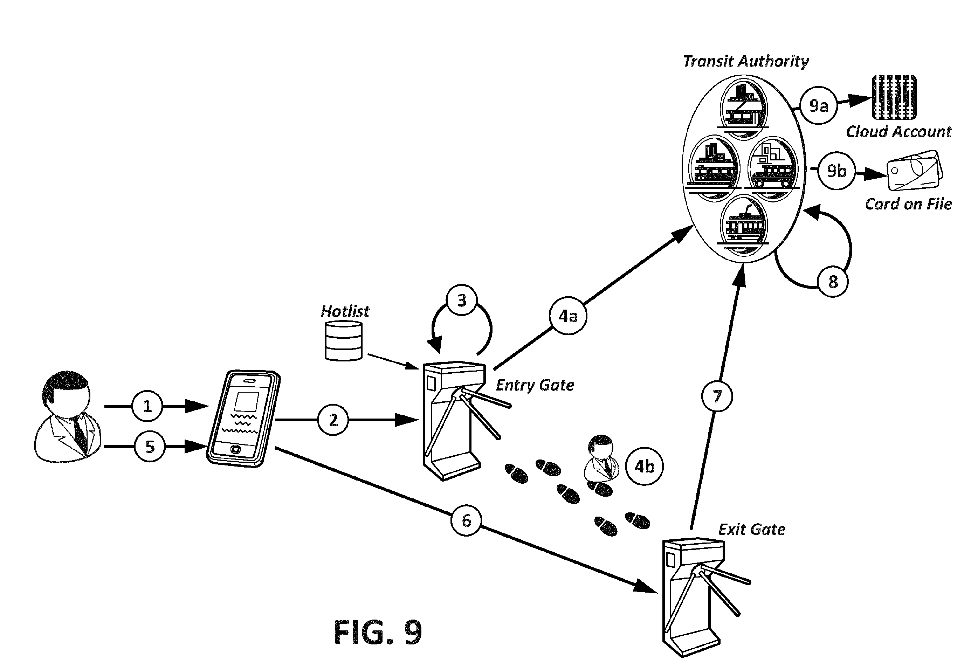

Authenticating users and obtaining authority is a use case that AIM is uniquely equipped to handle. To describe the use case in principle an example from the transit application area will be used. Using AIM, transport providers and users alike will be able to join in the creation of a singular service that can debit funds from an online account or charge daily usage to a source of funds at the end of the day. This use case assumes that both AIM user and AIM consumer are registered and that the AIM User has bound his/her AIM to the service being provided by the transit operator. The use case also assumes that the AIM user has a cloud account with the transit operator and that the transit operator has undertaken the necessary tasks to validate the source of funds that underpin the account. With these preconditions fulfilled the AIM user can present their device at the transit gate and AIM powered transit client can provide an authenticated instruction to the transit operator. The transit operator in turn can collect all the entry exit taps under taken by the AIM user through the day and calculate the most cost effective fare to the AIM user. The transit operator can then debit this amount from the AIM user's cloud account or registered source of funds. The steps taken in this use case are schematically shown in figure 9 and explained in the following table.

| | |
|---|---|
| 1 | Registered AIM user enters his AIM PIN and presents his device with AIM enabled transit application to the entry gate. |
| 2 | Transit gate obtains AIM ID, Authentication state, AIM Signature and PKC from AIM using NFC transaction. |
| 3 | Entry gate checks AIM ID against local deny list and validates authentication state. |
| 4a | If AIM ID not on local hotlist and authentication state positive AIM ID, AIM Signature and AIM PKC sent to transit authority along with entry notification via real-time or batched process. |
| 4b | If AIM ID not on deny list AIM User is allowed to start journey. |
| 5 | Registered AIM user presents his device with AIM enabled transit application to exit gate. |
| 6 | Transit gate obtains AIM ID, AIM Signature and PKC from AIM using NFC transaction. |
| 7 | Transit Gate sends AIM ID, AIM and AIM PKC along with exit notification to transit authority via real-time or batched process. |
| 8 | Transit authority analyses daily activity and calculates optimum fare for daily activity based on AIM ID. |
| 9a | Transit authority debits account linked to AIM Users AIM ID. |
| 9b | Alternatively the transit authority debits the AIM Users card on file. |

### Use case 15: AIM Powered Secure Logon / Single Sign On

A more generic application of the AIM would be in support of generic logon use cases and single sign on. The use case relies on the AIM signature and authentication status contained within the AIM response to allow a remote server to validate the authenticity of a user. Furthermore the AIM ID could, if required, be used as an alternate user ID. The steps taken according to an embodiment of the invention are explained in the following table:

| |
|---|
| Registered AIM user launches his AIM enabled logon client in the mobile device. |
| User is prompted to enter his AIM PIN. |
| The AIM authenticates the users PIN and prepares a response message for the remote server containing an AIM signature, user authentication status and AIM PKC. |
| The AIM response is sent to the remote server (AIM enabled webserver) for example, via internet. |
| The remote server validates the integrity of the message using the AIM PKC and checks the user's authentication status. |
| Upon successful validation of the AIM response and receipt of a positive user authentication status the remote server grants access to the AIM user. |

### Use case 16: AIM Powered Magnetic Data Point of Sale (mPOS)

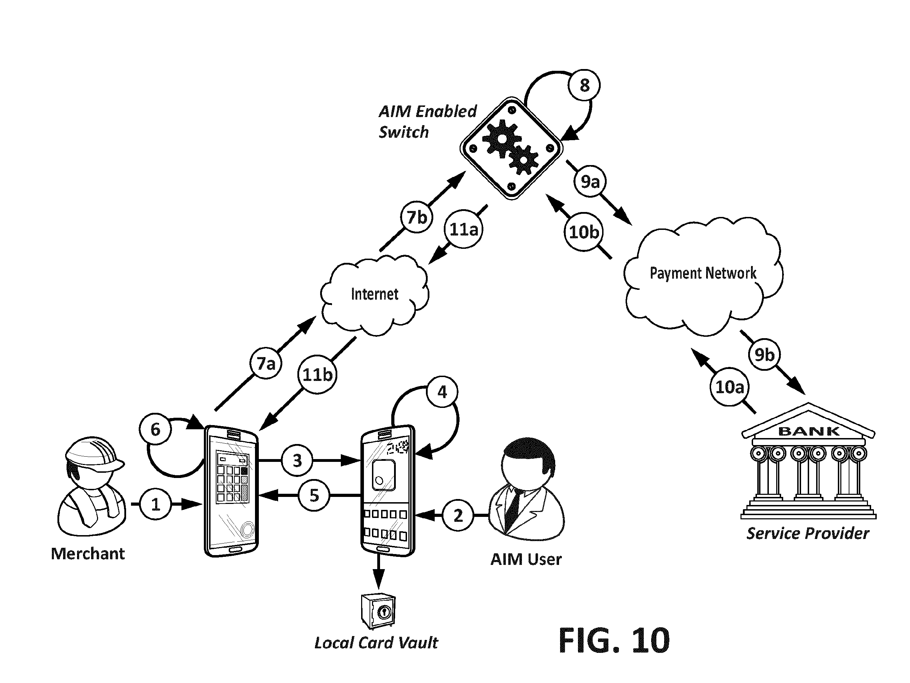

Mobile point of sales can also be conducted under the protection of AIM using aim enabled applications. Mobile handsets not supporting a Trusted Execution Environment (TEE) currently suffer from vulnerabilities with respect to the authentication of users. In addition to this all mobile Point of Sale (POS) solutions that attempt to use the handset suffer from the need to have a card interface unit attached in order to read a card through the contact interface. AIM can simplify the mobile POS to the point where transactions could effectively be conducted over the contactless using magnetic card data but with strong user authentication, as described in this use case. The steps taken, according to an embodiment of the invention, in this use case are schematically shown in figure 10 and explained in the following table. Part of card set-up magnetic stripe details of the card would need to be captured by the AIM wallet, this use case description assumes that this has been done and that the track 2 data needed for the transaction is in the AIM powered wallet and secured by AIM using the AIM unique key.

| | |
|---|---|
| 0 | AIM enabled wallet has been loaded with targets card's Track 2 magnetic data. Card detaisl protected using AIM Unique key |
| 1 | Merchant enters transaction into AIM enabled mPOS. |
| 2 | AIM User enters his AIM PIN and present device to mPOS. |
| 3 | mPOS uploads its own AIM PKC to user wallet (e.g. over NFC interface). |
| 4 | User AIM validates user's authentication status and translates locally stored track 2 data to mPOS AIM PKC and prepares response with user authentication status to mPOS. |
| 5 | Wallet application returns AIM response and track 2 data to mPOS application (this step could be performed as standard EMV mag-stripe over contactless interface with AIM encryption or through proprietary transaction). |
| 6 | mPOS AIM validates user authenticity and decrypts track 2 data using its AIM unique key |
| 7 a,b | mPOS sends approval request to AIM enabled switch, if user authentication positive. |
| 8 | AIM enabled switch performs optional validation of AIM user authentication status and/or decryption of card data |
| 9 a,b | AIM enabled switch posts transaction approval request to issuer via payment network |
| 10 a,b | Card issuer posts approval decision on payment network. |
| 11 a,b | AIM enabled switch returns issuer response to mPOS. |

### Use case 17: AIM Powered P2P Payment - Recipient Phone Number Known to Sender

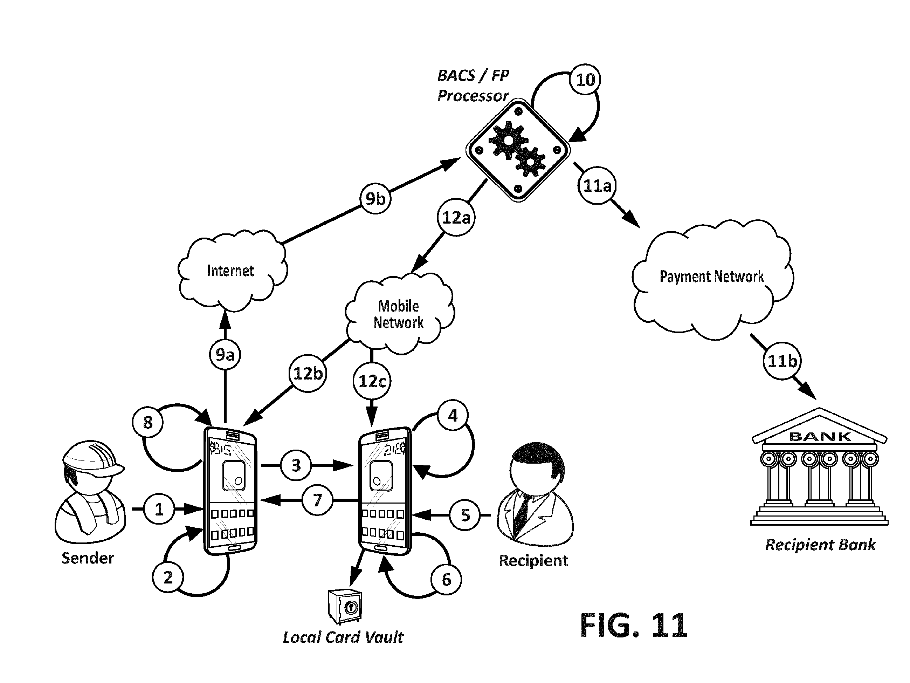

Personal or Peer-to Peer (P2P) payments is an area that has been in need of a consolidated solution to enable the secure exchange of accounts details with a known person in order to send them cash. Existing solutions have leveraged online capabilities to translate mobile numbers to recipient bank accounts and or closed loop banking environments to facilitate these translations. AIM in the capacity of a personal security manager could be used to eliminate the need for phone number to bank account translation between known parties and secure the necessary details on route to the payment processor. This use case describes a mechanism that could employ AIM to achieve a P2P payment between two individuals. The steps taken, according to an embodiment of the invention, in this use case are schematically shown in figure 11 and explained in the following table.

| | | |
|---|---|---|
| 0 | Recipients AIM enabled wallet has been loaded with wallet holder's bank details and stored local card vault and protected using AIM Unique Key and only accessible through PIN validation. BACS (Bank Automated Clearing Services)/FP(Faster Payment Services) processor's PKC is loaded to sender's AIM enabled wallet. Sender has Recipient's mobile phone number in his/her address book. | |
| 1 | Sender: | |
| | • | Enters amount he wishes to send to recipient into AIM enabled wallet |
| | • | Select recipient phone number from address book |
| | • | Authenticates to AIM via PIN entry and requests signed P2P intent message from AIM. |
| 2 | Sender's AIM validates AIM PIN and prepares P2P intent message with AIM Signature, Sender's authentication status, PKC and optionally, Name. | |
| 3 | P2P message sent to recipient over selected channel (e.g, SMS, NFC...or any other communications technique between two electronic devices). | |
| 4 | Recipient wallet validates AIM signature and checks Sender's Authentication status | |
| 5 | If message valid and Sender authentication state positive, Recipient validates to his AIM using AIM PIN and requests transmission of bank details stored in local card vault to sender's mobile number, protected under sender's AIM PKC | |
| 6 | Recipients AIM: | |
| | • | Validates Recipient's AIM PIN |
| | • | Encrypts bank details |
| | • | Prepares message for Sender with translated bank details, recipient AIM PKC and recipient authentication status. |
| 7 | Acceptance message with encrypted recipient bank details returned to sender via chosen channel. | |
| 8 | Sender's AIM enabled wallet: | |
| | • | Validates recipient authentication state and acceptance message |
| | • | Requests translation of recipient bank details to processors PKC from sender's AIM |
| | • | Prepares payment instruction to processor |
| 9 a,b | Sender's AIM enabled wallet sends payment request to BACS / FP Processor | |
| 10 | Payment processor validates P2P request message and initiates transfer of funds from senders account to recipients account. | |
| 11 a,b | Funds sent to recipients bank | |
| 12 a,b,c | Sender and recipient notified of successful P2P transfer. | |

Summarizing, the present invention proposes a technique for managing authentication, integrity and confidentiality of users transactions. AIM could be applied to any product/service which requires user authentication, preventing data tampering and protecting confidential data. AIM will be therefore very useful in many different areas, as for example, Identity services, Wallet Services, Access services, Online Payment, POS payments.

AIM provides to the involved parties, between others, the following advantages:
AIM provides application developers with strong two factor authentication off or online.
AIM can be used as the authentication method in a payment transaction
AIM signs the result of any transaction
AIM makes transactional data tamperproof and undeniable
AIM is linked to a mobile subscribers account and identity
AIM is versatile and can be extended to incorporate biometrics
AIM is simple and requires no costly issuance and lifecycle management processes
AIM is built on technologies understood by payment industry and mobile operator alike - EMV & GSMA/3G/4G
AIM can be applied to many Use Cases
AIM requires no costly SIMs and, generally speaking is cheap.

Even though many of the presented embodiments are referred to mobile communications networks, the present invention is not limited to mobile communications network but it can be applied to other communications network.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention.

Although the present invention has been described with reference to specific embodiments, it should be understood by those skilled in the art that the foregoing and various other changes, omissions and additions in the form and detail thereof may be made therein without departing from the scope of the invention as defined by the following claims.

Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method for providing an authentication, integrity and confidentially service for transactions performed between an user of a first mobile device and a provider of user services through a mobile communications network, the method comprising the following steps:
a) Receiving from the user by the first mobile device, at least a transaction request for a provider of user services;
b) For each transaction request received:
b1) A first application of the first mobile device, verifying user identity for the authentication, integrity and confidentially service, where the first application has been previously loaded in a Subscriber Identity Module of the first mobile device;
b2) If the user identity verification is successful, the first application preparing, at least one message to be sent to the provider of user services including transaction information and for each message prepared related to each transaction, the first application calculating a signature for each message using an unique asymmetric key and including said signature in the message;
b3) the first mobile device, sending the at least one prepared message to a server of the provider of user services through the mobile communications network.

2. A method according to any of the previous claims where the step of verifying user identity comprises the following steps:
- Prompting the user to enter an user personal identification number, PIN, for the authentication, integrity and confidentially service, associated to the user of the first mobile device;
- Receiving the user personal identification number;
- The first application validating the user personal identification number.

3. A method according to claim 2 where the user personal identification number has been generated by a mobile operator of the mobile communications network and provided to the user and to the first mobile device during the user registration in the authentication, integrity and confidentiality service.

4. A method according to claim 2 where the user personal identification number is set by the user during the user registration in the authentication, integrity and confidentiality service, by changing an initial personal identification number generated by a mobile operator of the mobile communications network.

5. A method according to claim 1 where the verification of user identity is performed using biometric identification of the user.

6. A method according to any of the previous claims, where the method further includes:
for each message related to the transaction received from the first mobile device by the server of the provider of user services, checking the integrity of the message by validating the signature using the public part of the unique asymmetric key and, if the validation is not successful, sending an error message to the first mobile device and stopping the transaction.

7. A method according to any of the previous claims where the first application is loaded in the SIM during SIM manufacture.

8. A method according to any of the previous claims where the transaction is a payment transaction.

9. A method according to any of the previous claims where the interaction between the first application and the user of the mobile device is done using a second application installed in the first mobile device and where the user access to the provider of user services is done by the second application

10. A method according to any of the previous claims where the at least one message is sent to the service provider via a Point of Sale Terminal which uses NFC technology.

11. A method according to any of the previous claims where the first application has an unique identification associated to the Subscriber Identity Module of the first mobile device, which uniquely identifies said first application from other first applications loaded in other Subscriber Identity Module.

12. A method according to any of the previous claims where the unique asymmetric key is univocally associated to the first application and it is different to other asymmetric key assigned to other first application of other users.

13. System for providing an authentication, integrity and confidentially service for transactions performed between an user of a first mobile device and a provider of user services through a mobile communications network, the system comprising the first mobile device comprising:
- Means for receiving from the user, at least a transaction request for the provider of user services;
- A subscriber identity module where a first application has been previously loaded, where the first application is configured to, for each transaction request received by the mobile device:
- Verifying user identity for the authentication, integrity and confidentially service;
- If the user identity verification is successful, preparing at least one message to be sent to the provider of user services including transaction information and for each message prepared related to each transaction, calculating a signature for each message using an unique asymmetric key and including said signature in the message;
- Means for sending the at least one prepared message related to each transaction, to a server of the provider of user services through the mobile communications network.

14. An application for providing an authentication, integrity and confidentially service for transactions performed between an user of a first mobile device and a provider of user services through a mobile communications network, the application for use with a system in accordance with claim 13 and the application comprising:
- Means for, for each transaction request received in the first mobile device:
- Verifying user identity for the authentication, integrity and confidentially service;
- If the user identity verification is successful, preparing at least one message to be sent to the provider of user services including transaction information and for each message prepared related to each transaction, calculating a signature for each message using an unique asymmetric key and including said signature in the message;

15. A digital data storage medium for storing a computer program which comprises instructions causing a computer executing the program to perform the method according to any of the claims 1-12.
